# EUROPÄISCHE PATENTANMELDUNG

(11) **EP 4 686 854 A1**
(43) Veröffentlichungstag der Anmeldung: **04.02.2026**
(21) Anmeldenummer: 25189216.2
(22) Anmeldetag: 14.07.2025
(51) Int. Cl.: F16D 3/72, F16D 3/78

(54) **ELASTISCHE KUPPLUNGSEINRICHTUNG MIT ELASTISCHER GITTERSTRUKTUR AUS DREIDIMENSIONALEN RAUMZELLEN, DAMIT AUSGESTATTETER TRIEBSTRANG, SOWIE HERSTELLUNGSVERFAHREN, COMPUTERPROGRAMMPRODUKT UND VERWENDUNG**

(30) Priorität: 01.08.2024 DE 102024121996; 01.08.2024 DE 202024104331 U
(71) Anmelder: Dipl.-Ing. Herwarth Reich GmbH, 44807 Bochum (DE)
(72) Erfinder: Jorde, Clemens, 45289 Essen (DE); Gustrau, Benjamin, 44807 Bochum (DE); Rödiger, Markus, 58455 Witten (DE)
(74) Vertreter: Tanner, Lukas

(57) **Zusammenfassung**

Elastische Kupplungen für Triebstränge müssen bei zahlreichen Anwendungen hohen Anforderungen genügen und auch anwendungsspezifisch optimiert werden können. Im hohen Drehzahlbereich verschärfen sich die Anforderungen weiter, z.B. hinsichtlich Wärmehaushalt, Lebensdauer, Massenträgheitseffekten. Bereitgestellt wird eine elastische Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite wenigstens ein elastischer Kupplungsabschnitt ausgebildet ist, welcher durch eine sich zumindest auch in radialer Richtung erstreckende Gitterstruktur aus dreidimensionalen Raumzellen gebildet ist, welche zumindest einen Axialabschnitt der Kupplungseinrichtung ohne zusätzliche Komponenten überbrückt. Hierdurch lässt sich ein vorteilhafter Kompromiss insbesondere aus Materialeinsatz und Variabilität beim Vorgeben der elastischen Eigenschaften erzielen. Die vorliegende Erfindung betrifft ferner einen Triebstrang mit wenigstens einer solchen darin verbauten elastischen Kupplungseinrichtung, sowie ein Verfahren zum Herstellen einer solchen elastischen Kupplungseinrichtung, sowie die Verwendung einer Gitterstruktur zum Bereitstellen eines/des elastischen Kupplungsabschnitts.

## Beschreibung

### TECHNISCHES GEBIET

Die vorliegende Erfindung betrifft eine elastische Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite wenigstens ein elastischer Kupplungsabschnitt ausgebildet ist. Ferner betrifft die vorliegende Erfindung einen Triebstrang mit wenigstens einer solchen darin verbauten elastischen Kupplungseinrichtung. Ferner betrifft die vorliegende Erfindung ein Verfahren zum Herstellen einer solchen elastischen Kupplungseinrichtung, insbesondere in integral-einstückiger Ausgestaltung. Nicht zuletzt betrifft die vorliegende Erfindung auch die Verwendung einer Gitterstruktur zum Bereitstellen eines/des elastischen Kupplungsabschnitts einer derartigen elastischen Kupplungseinrichtung zwischen einem ersten und zweiten Axialabschnitt eines entsprechenden Triebstrangs. Insbesondere betrifft die Erfindung eine elastische Kupplungseinrichtung und ein Verfahren gemäß dem Oberbegriff des jeweiligen unabhängigen Anspruchs.

### HINTERGRUND DER ERFINDUNG

Für viele industrielle Anwendungen werden elastische Kupplungen entlang eines Triebstrangs vorgesehen, zum Ausgleich von Versatz und/oder zum Dämpfen von Vibrationen bzw. Schwingungen oder Stößen. Der Triebstrang kann dabei je nach Anwendung auch für sehr hohe Drehzahlen von z.B. 20.000 Umdrehungen pro Minute konzipiert sein. Derartige elastische Kupplungen kommen beispielsweise auch in Prüfständen insbesondere zur Erprobung schnelllaufender Antriebe z.B. für die Elektromobilität zum Einsatz.

Üblicherweise werden die metallischen bzw. weitgehend starren Komponenten derartiger Kupplungen aus hochfestem Aluminium oder Titan oder CFK-Materialien gefertigt; für die elastischen Elemente kommen insbesondere Kautschukmischungen oder Polyurethan verschiedener Härte zum Einsatz. Trotz der Verwendung des Leichtbauwerkstoffs Aluminium erfordern einige Anwendungen eine weitergehende Massereduzierung, insbesondere um die Reaktionskräfte bzw. Massenträgheitskräfte der Kupplung auf den Triebstrang (z.B. auf eine Motorwelle) noch weiter minimieren zu können, was insbesondere mit steigender Drehzahl von größerer Bedeutung wird. Eine Massereduzierung insbesondere bei den metallischen Kupplungskomponenten kann grundsätzlich mit Werkstoffen realisiert werden, welche ein günstiges Verhältnis von Dichte zu Festigkeit aufweisen, z.B. Magnesium oder Titan. Durch Topologieoptimierung der Bauteile kann zudem Material an gering belasteten Bereichen eingespart werden, wodurch auch konstruktive Lösungen gefunden werden können, bei denen mehrere Komponenten der Konstruktion zu einem Bauteil verschmelzen. Nichtsdestotrotz besteht Interesse an weiteren Maßnahmen und Möglichkeiten, um den Aufbau bzw. das konstruktive Konzept von derartigen elastischen Kupplungen insbesondere für den Hochdrehzahlbereich noch weiter optimieren zu können.

Ausgehend vom Stand der Technik ist ein Bedarf an weiterführenden Optimierungen insbesondere hinsichtlich Einflussnahmemöglichkeiten bezüglich der Elastizitätseigenschaften und hinsichtlich Materialeinsatz/-aufwand zu spüren. Insbesondere besteht Interesse an einem verbesserten konstruktiven Konzept bei der Integration elastischer Komponenten in den Aufbau der Kupplung. Nicht zuletzt besteht insbesondere mit Blick auf Hochdrehzahlanwendungen auch Interesse an möglichst geringem Eigengewicht.

Beispielhaft kann die Veröffentlichung DE 20 2023 102 375 U1 genannt werden, welche ein so genanntes Steifigkeitsmodul beschreibt, das sich in monopterer Anordnung radial außen um weitere Kupplungskomponenten in einer zylindrischen Mantelfläche um die Rotationsachse der Kupplung erstreckt und aus einer Vielzahl von Stegen und/oder Säulen gebildet ist, die auf einem Durchmesser angeordnet sind, welcher größer ist als die weiteren Kupplungskomponenten, wobei sich die Stege und/oder Säulen X-förmig parallel zur Rotationsachse erstrecken und die weiteren Kupplungskomponenten in der Art einer zylindrischen Hülle umgeben. Die Stege und/oder Säule sollen auf diesem radial außenliegenden Durchmesser eine Torsionsbelastung dämpfen können sowie eine Kompensation von radialem Versatz und Winkelversatz erlauben können; axialer Versatz hingegen soll an der entsprechenden Axialposition durch ein so genanntes Anbindungselement einseitig stirnseitig unabhängig von den Stegen und/oder Säulen realisiert werden. Für diesen Zweck weist das entsprechende Anbindungselement einen sich nach radial außen verjüngenden Materialquerschnitt auf.

### ZUSAMMENFASSUNG DER ERFINDUNG

Aufgabe ist, eine elastische Kupplung für Triebstränge bereitzustellen, mittels welcher die elastische(n) Komponente(n) der Kupplung besonders vorteilhaft integriert bzw. implementiert werden kann/können. Auch ist es Aufgabe, eine elastische Kupplung für Triebstränge derart auszugestalten, dass bei möglichst guter Variabilität hinsichtlich der elastischen Eigenschaften auch ein möglichst geringes Eigengewicht sichergestellt werden kann, insbesondere für Hochdrehzahlanwendungen. Nicht zuletzt ist es Aufgabe, eine elastische Kupplung derart zu konzipieren, dass die Einbindung der elastischen Kupplung in den Triebstrang auf besonders effektive Weise vollzogen werden kann.

Diese Aufgabe wird durch eine elastische Kupplungseinrichtung gemäß Anspruch 1 sowie durch ein Verfahren gemäß dem nebengeordneten Verfahrensanspruch sowie durch Verwendungen gemäß den nebengeordneten Verwendungsansprüchen gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine elastische Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite (wenigstens) ein elastischer Kupplungsabschnitt ausgebildet ist; Erfindungsgemäß wird vorgeschlagen, dass der (wenigstens) eine elastische Kupplungsabschnitt durch eine sich zumindest auch in radialer Richtung erstreckende Gitterstruktur aus dreidimensionalen Raumzellen gebildet ist, welche zumindest einen Axialabschnitt der elastischen Kupplungseinrichtung drehmomentübertragend (und dabei elastisch bzw. elastizitätsbegründend) überbrückt, insbesondere ohne irgendwelche weiteren/zusätzlichen starre oder elastische Komponenten. Dies begünstigt einerseits vorteilhafte Elastizitätseigenschaften, insbesondere auch in mehrdimensional-räumlicher Hinsicht, andererseits kann auch das eingesetzte Material besonders effizient/effektiv zur Geltung kommen, insbesondere auch mit dem vorteilhaften Effekt geringen Eigengewichts, insbesondere auch mit sehr guter Wärmeabfuhr für Anwendungsfälle mit hoher Verformungsarbeit. Dabei ist ein vollständiger Verzicht auf (separate/zusätzliche) Elastomerkomponenten problemlos implementierbar und erfindungsgemäß auch gewünscht. In funktionaler Hinsicht kann die herkömmlicherweise (allein) mittels Elastomerkomponenten implementierte Ausgleichsfunktion vollständig in die Gitterstruktur übertragen werden bzw. mittels der Gitterstruktur implementiert werden. Dies liefert auch den Vorteil, dass etwaige Verlustarbeit nicht zu einer Erwärmung irgendwelcher (separater/zusätzlicher) Elastomerkomponenten wie z.B. Sattelstollen führt, so dass auch eine gute Lebensdauer bzw. ein sehr vorteilhaftes Langzeitverhalten sichergestellt werden kann. Im Gegensatz dazu ist im Stand der Technik häufiger zu beobachten, dass Kupplungen mit (separaten) Elastomerkomponenten/-elementen wie z.B. Gummi-Sattelstollen bei schwierigen Einsatzbedingungen, insbesondere hoher Umgebungstemperatur, vergleichsweise früh thermisch versagen, also einer Wartung oder gar eines Austausches bedürften, obgleich die Kupplung als solche (ausgenommen die Elastomerkomponenten) noch in einem vergleichsweise guten Zustand sein mag.

Vorteilhaft ist die Gitterstruktur eine in wenigstens zwei Raumrichtungen offenzellige Gitterstruktur, weiter bevorzugt eine in allen Raumrichtungen offenzellige Gitterstruktur. Vorteilhaft umgrenzt die Gitterstruktur in mehreren Raumrichtungen ein offenzelliges Gittervolumen, beispielsweise ein ringzylindrisches Volumen.

Als elastischer Kupplungsabschnitt ist insbesondere ein Axialabschnitt des Triebstrangs zu verstehen, für welchen die Elastizität durch die Gitterstruktur vorgegeben ist bzw. werden kann. Ein auf elastische Kupplungen spezialisierter Fachmann mag diesen elastischen Kupplungsabschnitt auch als Steifigkeitsabschnitt bezeichnen, insbesondere da die Steifigkeit bei elastischen Kupplungen als einer der wichtigsten Auslegungsparameter erachtet wird, insbesondere raumrichtungsspezifisch. Wahlweise kann die hier beschriebene Gitterstruktur in unterschiedlichen Abschnitten (axial und/oder radial) unterschiedliche Eigenschaften aufweisen, z.B. definiert durch die Stärke und/oder Geometrie von beispielsweise einzelnen Gitterstäben der Gitterstruktur, so dass der elastische Kupplungsabschnitt auch durch eine Mehrzahl von elastischen Abschnitten jeweils mit Gitterstruktur gebildet sein kann. Vorteilhaft geht die jeweilige Gitterstruktur dieser Abschnitte stetig in die nächstgelegene Gitterstruktur über. Demnach kann auch eine integral-einstückige Gitterstruktur gemäß der vorliegenden Erfindung eine Mehrzahl von elastischen (Kupplungs-)Abschnitten aufweisen bzw. bereitstellen.

Als "Elastizität" ist hier insbesondere die Steifigkeit des für die Elastizität wirksamen elastischen Kupplungsabschnitts zu verstehen, je nach Kontext auch achs- bzw. raumrichtungsspezifisch.

Als "zumindest einen Axialabschnitt... überbrückt" ist insbesondere eine Anordnung des elastischen Kupplungsabschnitts zwischen zwei stirnseitig flanschbaren Kupplungsseiten zu verstehen, wobei der elastische Kupplungsabschnitt im entsprechenden Axialabschnitt vorteilhaft die einzige Kupplungskomponente ist (also ohne dass weiterer drehmomentübertragende Komponenten in diesem Axialabschnitt oder auch im gesamten Triebstrang wirken, und ohne dass irgendwelche weiteren elastischen Komponenten wirken).

Sofern gemäß der vorliegenden Offenbarung von Triebstrang gesprochen wird, so sind darunter einerseits Antriebstränge im Allgemeinen zu verstehen, andererseits auch z.B. auf Prüfständen für Prüfzwecke gebildete Triebstränge.

Sofern gemäß der vorliegenden Offenbarung von "Hochdrehzahlbereich" gesprochen wird, so ist darunter je nach Anwendung und Kupplungsgröße ein Drehzahlbereich ab z.B. 8.000 Umdrehungen pro Minute zu verstehen, insbesondere auch ein Drehzahlbereich ab 20.000 Umdrehungen pro Minute. Anders ausgedrückt: Je nach Größenskalierung und Anwendung kann der Hochdrehzahlbereich unterschiedlich definiert sein; insbesondere umfasst der Hochdrehzahlbereich auch Drehzahlen im Bereich von 20.000U/min.

Personifizierte Begriffe, soweit sie hier nicht im Neutrum formuliert sind, können im Rahmen der vorliegenden Offenbarung alle Geschlechter betreffen. Etwaige hier verwendete fremdsprachige Ausdrücke oder Abkürzungen sind jeweils branchenübliche Fachausdrücke und sind dem Fachmann in der entsprechenden Sprache geläufig. Etwaige dazu synonym verwendete/verwendbare deutschsprachige Begriffe können hier der Vollständigkeit halber in (Klammern) angegeben werden, oder vice versa, beispielsweise bezüglich des Begriffs "lattice" (Gitterstruktur, Gitterverband).

Mit anderen Worten stellt die vorliegende Erfindung eine technische Lösung für die Konzipierung bzw. Herstellung von elastischen Kupplungen/Kupplungseinrichtungen bereit, bei welchen das elastische Element bzw. der elastisch wirkende Abschnitt der Kupplung (also der die Steifigkeit der Kupplung definierende Abschnitt) aus einer vorteilhaft additiv gefertigten Gitterstruktur besteht (hier demnach schlagwortartig auch als "Lattice-Kupplung" bezeichnet, synonym für Gitterstruktur, Gitterverband, dreidimensionales Fachwerk, jeweils wahlweise regelmäßig oder zumindest abschnittsweise auch unregelmäßig), insbesondere aus einer Kunststoff-Gitterstruktur, vorteilhaft aus einer einstückigen und integral eingebundenen Gitterstruktur. Die Erfindung ist dabei insbesondere auch auf Hochdrehzahl-Anwendungsbereiche ausgerichtet, basiert dabei auch auf dem Konzept einer sehr effektiven Massereduktion. Die Anschlussflächen (erste und zweite Kupplungsseite) der Kupplungseinrichtung können vorteilhaft integral in das Gitterstrukturbauteil (bzw. in den Gitterstrukturabschnitt) integriert bzw. daran angebunden sein/werden, beispielsweise indem metallische Gewindeeinsätze an der jeweiligen Stirnseite eingebettet sind/werden. Es hat sich gezeigt, dass der hier beschrieben Gitterstrukturaufbau eine deutliche Gewichtsersparnis ermöglicht, insbesondere bei vergleichbarer Drehmomentkapazität und weitgehender Bauraumneutralität. Durch Variation der Gitterstruktur-Geometrie, beispielsweise sowohl betreffend Raumzellen der Struktur als auch betreffend Querschnitte/Geometrien von Gitterstrukturelementen, insbesondere Gitterstabquerschnitte/-geometrie, können die Torsions- und Lateralsteifigkeiten in einem breiten Bereich anwendungsspezifisch vordefiniert werden. Damit wird die anwendungsspezifische Auslegung der hier beschriebenen elastischen Kupplungseinrichtung spürbar erleichtert, beispielsweise auch in Hinblick auf anwendungsspezifische Drehschwingungen und anwendungsspezifisch individuell geforderte Verlagerungsfähigkeit (Versatzausgleichskapazität). Dabei kann die offenzellige Gitterstruktur vorteilhaft auch auf sehr effiziente/effektive Weise zur Wärmeabfuhr beitragen, insbesondere da sie von Luft durch-/umströmt werden kann. Etwaige im elastischen Kupplungsabschnitt entstehende Wärme, insbesondere Wärme aus elastischer Verformungsarbeit, kann demnach deutlich besser abgeführt werden als bei massiven (separaten/zusätzlichen) Elastomerelementen oder dergleichen. Da die thermische Alterung die Lebensdauer entscheidend beeinflusst/limitiert, kann bereits bei passiver Kühlung des elastischen Kupplungsabschnitts von einer deutlich längeren Standzeit bzw. Lebensdauer bzw. Betriebsdauer ausgegangen werden.

Gleichwohl ist zu verstehen, dass die vorliegende Erfindung auch eine Ausgestaltung aus Elastomermaterial/-werkstoff umfasst. Insofern ist der Begriff Kunststoff hier gemäß der vorliegenden Offenbarung auch so zu verstehen, dass darunter Elastomere umfasst sind. Denn es mag zwar zutreffen, dass die vorliegende Erfindung vornehmlich in einem ersten Schritt die mit vergleichsweise massigen/massiven Elastomerelementen verbundenen Nachteile überwindet durch Einsparung von Eigengewicht und durch deutlich filigranere Strukturen, gleichwohl kann die hier beschriebene Gitterstruktur auch aus Elastomermaterial/-werkstoff konzipiert und realisiert sein werden. Insofern können auch wärmetechnische Vorteile (insbesondere effektive Konvektion) durch die hier beschriebenen Gitterstrukturen aus Elastomermaterial/-werkstoff realisiert werden, und auch die hier beschriebenen Herstellungsschritte können im Kontext mit Elastomermaterial/-werkstoff realisiert werden. Auch gemäß allgemeiner technischer Definition sind Elastomere formfeste, jedoch elastisch verformbare Kunststoffe. Indem gemäß der vorliegenden Offenbarung allgemein von Kunststoff gesprochen wird, erfolgt zumindest insofern eine Abgrenzung vom Stand der Technik, also der elastische Kupplungsabschnitt jedenfalls durch eine Gitterstruktur gebildet ist, sei es durch eine Gitterstruktur aus vergleichsweise harten Kunststoffen, sei es durch eine Gitterstruktur aus Elastomeren im engeren Sinne.

Nicht zuletzt begünstigt der erfindungsgemäße Aufbau der elastischen Kupplungseinrichtung auch eine spürbare Verringerung der benötigten bzw. der in den Triebstrang einzubindenden Teile/Komponenten, insbesondere da es die hier beschriebene elastische Gitterstruktur ermöglicht, zumindest den elastischen Abschnitt der elastischen Kupplungseinrichtung und wahlweise auch die gesamte elastische Kupplungseinrichtung integral-einstückig auszugestalten. Anders ausgedrückt: Es besteht auch kein Erfordernis, mehrere elastische Elemente irgendwie zwischen Klauen oder dergleichen im Wesentlichen starrer kuppelnder Teile anzuordnen und zu halten bzw. zu sichern.

Gemäß der vorliegenden Offenbarung wird der elastische Kupplungsabschnitt auch als wenigstens ein elastischer Kupplungsabschnitt beschrieben, insbesondere um zu verdeutlichen, dass die Kupplungseinrichtung oder zumindest der Triebstrang auch mehrere elastische Kupplungsabschnitte aufweisen kann. Unter Bezugnahme auf die Gitterstruktur aus dreidimensionalen Raumzellen ist dabei jedoch zu verstehen, dass das erfindungsgemäße Konzept es vorteilhaft ermöglicht, den elastischen Kupplungsabschnitt auch als nur einen einzigen elastischen Kupplungsabschnitt mittels der Gitterstruktur aus dreidimensionalen Raumzellen zu implementieren.

Beispielsweise umfasst der wenigstens eine elastische Kupplungsabschnitt (ohne weitere elastische Elemente) ausschließlich die Gitterstruktur, mittels welcher die Elastizität (bzw. Steifigkeit) der Kupplung(seinrichtung) in wenigstens einer Raumrichtung und/oder bezüglich wenigstens einer Raumachse definierbar ist, wobei der wenigstens eine elastische Kupplungsabschnitt ohne zusätzliche starre Kupplungsabschnitte eine axiale Anbindung der ersten und zweiten Kupplungsseiten sicherstellt, insbesondere über einen/den ausschließlich durch den wenigstens einen mittels des als Gitterstruktur ausgestalteten elastischen Kupplungsabschnitts überbrückten elastischen Axialabschnitt. Anders ausgedrückt: Die Gitterstruktur kann (material-)elastisch zwischen ansonsten zumindest im Wesentlichen starren (axialen) Triebstrangabschnitten wirken.

Beispielsweise ist die elastische Kupplungseinrichtung eingerichtet, mit den folgenden Komponenten in aufeinanderfolgender Reihenanordnung im Triebstrang verbaut bzw. gekuppelt zu sein/werden: erster Abschnitt des Triebstrangs verbunden mit dem wenigstens einen elastischen Kupplungsabschnitt (mit dessen erster Kupplungsseite) der elastischen Kupplungseinrichtung, zweiter Abschnitt des Triebstrangs verbunden mit dem wenigstens einen elastischen Kupplungsabschnitt (mit dessen zweiter Kupplungsseite) der elastischen Kupplungseinrichtung. Vorteilhaft ist die elastische Kupplungseinrichtung eingerichtet, die Gitterstruktur axial in Reihe zwischen einen ersten und zweiten Abschnitt des Triebstrangs zu kuppeln, bevorzugt je axialer Seite angebunden lediglich mittels einer Scheiben oder dergleichen Flanschabschnitt, bevorzugt integral-einstückig angebunden. Vorteilhaft ist die elastische Kupplungseinrichtung integral-einstückig axial zwischen den ersten und zweiten Abschnitt des Triebstrangs einbaubar.

Beispielsweise verläuft der Kraft-/Drehmomentfluss von der ersten Kupplungsseite zur zweiten Kupplungsseite (bzw. vice versa) bzw. vom ersten Triebstrangaxialabschnitt zum zweiten Triebstrangaxialabschnitt in zumindest einem Axialabschnitt der Kupplungseinrichtung ausschließlich über einen/den mittels des wenigstens einen als Gitterstruktur ausgestalteten (material-)elastischen Kupplungsabschnitts überbrückten elastischen Axialabschnitt.

Es ist zu verstehen, dass das erfindungsgemäße Konzept auch auf der Erkenntnis basiert, die Gitterstruktur zwar aus dreidimensionalen offenzelligen Raumzellen skalierbar aufzubauen, dass die Raumzellen dabei jedoch nicht notwendigerweise als Einheitszellen mit derselben deckungsgleichen Konfiguration auszugestalten sind, sondern dass es vielmehr vorteilhaft ist, zwar ein gemeinsames geometrisches Grundkonzept für die Raumzellen zu definieren, z.B. dieselbe Raumzellen-Grundfläche, davon ausgehend jedoch eine Größenskalierung vorzusehen, insbesondere geometrisch kompatibel mit (Hohl-)Zylindersegmenten. Die Größenskalierung erfolgt bevorzugt nach radial außen größer werdend. Wahlweise kann im gleichen Maße (ebenfalls nach radial außen) eine Materialstärke einzelner Gitterstrukturelemente (z.B. einzelner Gitterstäbe) abnehmen.

Die hier beschriebenen dreidimensionalen Raumzellen können auch Raumzellen sein, welche durch gegebenenfalls computergestützte Maßnahmen der Topologieoptimierung erhalten sind/werden.

Die hier beschriebenen dreidimensionalen Raumzellen können auch wenigstens einen Typ (dreidimensionale) Raumzelle aus der folgenden Gruppe umfassen: Gyroid-Raumzelle, Lidinoid-Raumzelle, Raumzelle mit bionischer Struktur bzw. mit Raumstruktur gemäß der Strukturbionik. Dabei kann eine topologische Optimierung insbesondere auch vor dem Aspekt geringen Materialverbrauchs und/oder möglichst geringen Flächenanteils erfolgen. Insbesondere die beiden erstgenannten Typen Gyroid und Lidinoid begünstigen dabei eine Optimierung, bei welcher der Flächenanteil minimiert ist. Insofern ist die hier an mehreren Stellen erfolgende Bezugnahme auf Raumzellenstrukturelemente bzw. Gitterstrukturelemente auch dahingehend zu verstehen, dass die Strukturelemente nicht notwendigerweise im Wesentlichen zweidimensional ausgestaltet sein müssen, sondern dass auch ein gleitender Übergang hin zu zumindest abschnittsweise flächigen Strukturelementen bzw. Strukturabschnitten erfolgen kann, welche sich vorteilhaft periodisch wiederkehrend auch in Raumzellen realisieren lassen, bei vorteilhaft gleichwohl geringem Flächenanteil bzw. bei vorteilhaft geringem Materialeinsatz.

Es ist auch zu verstehen, dass die vorliegende Offenbarung bewusst nicht von Gitter spricht, sondern von einer Gitterstruktur, und zwar von einer bevorzugt offenzelligen Gitterstruktur, die vorteilhaft regelmäßig wiederkehrende Strukturen zumindest in einer Raumrichtung aufweist und wahlweise auch unregelmäßige Strukturen und/oder flächige Abschnitte umfassen kann. Zwar kann es als vorteilhaft erachtet werden, ausgehend von einer geometrisch vordefinierbaren Struktur skalierbar die gesamte Gitterstruktur in der Art einer regelmäßigen Struktur auszulegen, insbesondere um Kraftflusspfade und/oder Kraftübertragungsknotenpunkte (geometrisch) gezielt vorgeben zu können (und dabei geometrisch unabhängig von einer anwendungsspezifischen Skalierung zu bleiben), gleichwohl mag es anwendungsspezifisch ebenso vorteilhaft sein, die Gitterstruktur zumindest abschnittsweise oder zumindest in einer Raumrichtung bzw. in zumindest einer Ebene unregelmäßig (z.B. stochastisch) auszugestalten und/oder durch flächige Abschnitte zu ergänzen oder z.B. auch weiter zu verstärken.

Gemäß einem Ausführungsbeispiel nimmt eine jeweilige dreidimensionale Raumzelle die geometrische Form eines (Hohl-)Zylindersegments ein oder bildet das (Hohl-)Zylindersegment zusammen mit in radialer Richtung benachbarten weiteren Raumzellen. Dies begünstigt nicht zuletzt eine vergleichsweise einfache Auslegung und Skalierung der Kupplungseinrichtung, insbesondere bei unverändertem Aufbau, insbesondere bei unverändertem Aufbau von z.B. Gitterstäben. Dabei muss nicht notwendigerweise eine einzige Raumzelle das (Hohl-)Zylindersegment bilden, sondern es können auch mehrere Raumzellen zusammen (skaliert) ein dann größeres (Hohl-)Zylindersegment bilden.

Als Hohlzylindersegment ist ein Zylindersegment zu verstehen, welches radial innen nicht spitz sondern stumpf ist, sich also nicht bis zum Mittelpunkt erstreckt. Raumzellen mit einer Geometrie von Hohlzylindersegmenten können demnach im radial innenliegenden Abschnitt vorliegen; alternativ sind auch die radial innenliegenden Raumzellen nach innen spitz zulaufend als Zylindersegmente ausgestaltet.

Gemäß einem Ausführungsbeispiel ist die Gitterstruktur aus einer Vielzahl von Raumzellen aufgebaut, die in radialer Richtung aneinandergereiht jeweils ein Zylindersegment oder ein Hohlzylindersegment der Gitterstruktur bilden, z.B. über einen Umfangswinkel im Bereich von 10 bis 20 Grad. Die (Umfangs-)Größe einer jeweiligen Raumzelle kann dabei auch anwendungsspezifisch angepasst werden; indem die Raumzellen unabhängig von deren Radialposition gleichbleibend denselben Umfangswinkel einnehmen, ist auch eine Größenskalierung in radialer Richtung auf einfache Weise realisierbar.

Gemäß einem Ausführungsbeispiel umfasst die Gitterstruktur eine Vielzahl von Knotenpunkten auf einer Mehrzahl von (unterschiedlich großen) Teilkreisen, also eine Vielzahl von Knotenpunkten an unterschiedlichen Radialpositionen. Dies begünstigt auch eine Weiterführung des Raumzellenaufbaus in radialer Richtung z.B. durch eine größere Anzahl von radial hintereinander gereihten Raumzellen. Vorteilhaft sind die Vielzahl von Knotenpunkten auch an gleich großen Teilkreisen an mehreren Axialpositionen vorgesehen. Vorteilhaft ist die Anzahl der Knotenpunkte je Teilkreis betragsmäßig gleichbleibend.

Gemäß einem Ausführungsbeispiel ist das von der Gitterstruktur eingenommene Gittervolumen (also derjenige Volumenbereich, über welchen sowohl der Kraft-/Drehmomentfluss als auch die elastische Kompensation erfolgen soll) zylindrisch oder hohlzylindrisch, wahlweise zylindrisch mit zur Rotationsachse hin massivem Materialaufkommen. Dies begünstigt nicht zuletzt auch eine vergleichsweise robuste Ausgestaltung, mit der Option von in radialer Richtung spezifizierten Funktionsbereichen über einen vergleichsweise großen Radius (z.B. mindestens 10cm), insbesondere bei einer Reihenschaltung der Kupplungseinrichtung beidseitig stirnseitig geflanscht im Triebstrang.

Gemäß einem Ausführungsbeispiel umfasst die Gitterstruktur eine Vielzahl von Knotenpunkten in einer Mehrzahl von radial ausgerichteten (also axial nebeneinanderliegenden bzw. parallel zueinander verlaufenden) Ebenen, wobei die Knotenpunkte einer jeweiligen radialen Ebene zur Rotationsachse hin zu massiven scheibenartigen Stegen zusammenlaufen. Dies kann auch den Funktionsumfang des elastischen Kupplungsabschnitts sowie die konstruktiv realisierbare Variabilität der Steifigkeitscharakteristik weiter steigern, sei es hinsichtlich Torsion (oder auch anderer Belastungsarten), sei es hinsichtlich Elastizität in axialer Richtung. Die massiven scheibenartigen Stege können dabei in einem vordefinierbaren Axialabstand relativ zueinander angeordnet sein, so dass auch ein oberer Schwellwert für eine axiale Relativbewegung definiert werden kann (Limitierung durch Kontaktierung auf Stoß bei axialer Kompression der Gitterstruktur).

Eine Ausgestaltung zur Rotationsachse hin zu massiven scheibenartigen Stegen zusammenlaufenden Gitterstrukturelementen, insbesondere Gitterstäben, hat auch den Vorteil, dass die Elastizität in axialer Richtung auf einfache Weise in Kombination mit einem Überlastschutz implementiert werden kann, z.B. wenn in axialer Richtung nur wenig Luft zwischen benachbarten Stegen konstruktiv eingeplant wird bzw. vorgesehen ist.

Vorteilhaft gehen die einzelnen Gitterstrukturelemente, insbesondere Gitterstäbe an den Knotenpunkten in Radien ineinander über. Hierdurch kann auch der Kraftfluss weiter optimiert werden. Dabei kann je nach gewähltem additivem Verfahren auch mit den kleinsten der technisch realisierbaren Auflösungen gearbeitet werden, je nach Materialauswahl und gewünschter Qualität/Güte der Kupplungseinrichtung, beispielsweise basierend auf 1/10 mm Auflösung.

Rein beispielhaft kann als additives Verfahren für Kunststoffmaterialien ein Pulverbett-Verfahren genannt werden. Beispielsweise wird mittels eines solchen Verfahrens eine im Wesentlichen integral-einstückige Kupplungseinrichtung mit integral an die Gitterstruktur angebundenen stirnseitigen Flanschabschnitten bereitgestellt. Die vorteilhafte Offenzelligkeit der Gitterstruktur ermöglicht auch im Kontext der Auswahl eines vorteilhaften additiven Fertigungsprozesses vergleichsweise große Variabilität. Vorteilhaft ist die Kupplungseinrichtung als ein zylindrisches Maschinenelement ausgestaltet bzw. weist in geometrischer Hinsicht eine zylindrische Hüllkontur bzw. Hülle auf (zumindest zylindrische Mantelfläche), wobei auch die Stirnseiten abgesehen von Kupplungs-/Verbindungsmitteln (insbesondere Höckern für Schraubhülsen) zumindest annähernd plan/eben ausgestaltet sein können.

Gemäß einem Ausführungsbeispiel sind die dreidimensionalen Raumzellen in radialer Richtung aufeinanderfolgend volumetrisch größer skaliert, insbesondere bei zumindest annähernd demselben Materialaufkommen zum Bilden der jeweiligen Raumzelle. Dies begünstigt auch effektive Wärmeabfuhr insbesondere in stark beanspruchten bzw. besonders hohen Umfangsgeschwindigkeiten unterliegenden Abschnitten der Gitterstruktur. Anders ausgedrückt: Die Gitterstrukturelemente, insbesondere Gitterstäbe werden bei dieser Ausgestaltung vorteilhaft nach außen hin dünner. Hierdurch kann eine vergleichsweise homogene Lastverteilung über die gesamte radiale Ausdehnung der Gitterstruktur sichergestellt werden.

Gemäß einem Ausführungsbeispiel sind/werden Gitterstrukturelemente, insbesondere Gitterstäbe einer weiter radial außen liegenden Raumzelle dünner als Gitterstrukturelemente, insbesondere Gitterstäbe einer weiter innen liegenden Raumzelle, insbesondere kontinuierlich/stetig dünner. Dies begünstigt auch die Implementierung einer vergleichsweise hohen (Material- bzw. Gitterstrukturelement-)Elastizität in den radial weiter außenliegenden Bereichen. Die Abnahme der Durchmesserstärke der Gitterstrukturelemente, insbesondere Gitterstäbe nach radial außen kann dabei vorteilhaft stetig bzw. kontinuierlich implementiert sein, z.B. um den Faktor 1,5 bis 2,5 von radial ganz innen bis radial ganz außen.

Gemäß einem Ausführungsbeispiel ist die Gitterstruktur eine offenzellige Gitterstruktur, welche derart ausgestaltet ist, dass erzwungene (Luft-)Konvektion bei Rotation der elastischen Kupplungseinrichtung zu effektiver Wärmeabgabe von den Gitterstrukturelementen, insbesondere Gitterstäben der Gitterstruktur an die Umgebung führt, insbesondere mit erzwungener Konvektion zumindest in tangentialer Richtung bzw. in Umfangsrichtung, wahlweise auch von erzwungener Konvektion auch in radialer Richtung, insbesondere bei hohlzylindrischem Gitterstruktur-Volumen von radial innen nach radial außen (oder umgekehrt), so dass eine thermische Beanspruchung des elastisch wirksamen Bereichs minimiert ist und die Standzeit bzw. Lebensdauer maximiert wird. Die Optimierung des Wärmehaushalts kann durch die hier beschriebene (offenzellige) Gitterstruktur spürbar erleichtert werden. So ist es basierend auf der vorliegend beschriebenen Architektur der Gitterstruktur auch denkbar, den Wärmehaushalt für in thermischer Hinsicht besonders kritische Anwendungen durch gezielt eingebrachte erzwungene Konvektion zu optimieren, beispielsweise durch eine technisch generierte Luftzufuhr von radial innen nach radial außen.

Gemäß einem Ausführungsbeispiel bilden Gitterstrukturelemente, insbesondere Gitterstäbe einer jeweiligen Raumzelle in radialer Blickrichtung, also in der Mantelhüllfläche (bzw. projiziert in die Mantelhüllfläche), eine rautenförmige Parallelogramm-Geometrie. Dabei kann sich die rautenförmige Parallelogramm-Geometrie kanalartig radial bis zum gewünschten Innenradius-Teilkreis erstrecken (und dort enden oder in einen scheibenartigen Steg übergehen).

Gemäß einem Ausführungsbeispiel bilden in radialer Richtung aneinandergrenzende Raumzellen schlauchartige Raumvolumina mit vierseitiger Querschnittskontur, insbesondere mit rautenförmigem Querschnitt. Die Rautengeometrie hat sich insbesondere in Hinblick auf gute Größenvariabilität und Variabilität hinsichtlich Umfangswinkel der Raumzellen (bzw. Umfangswinkel einer wiederkehrenden geometrischen Gitterkonfiguration bzw. eines (Hohl-)Zylindersegments der Gitterstruktur) und Anzahl der (Knotenpunkt-)Ebenen und Knotenpunktteilkreise (also radial sowie axial) als vorteilhaft erwiesen, nicht zuletzt auch hinsichtlich einer integral-einstückigen (additiv gefertigten) Anbindung an die hier so bezeichneten stirnseitigen Flanschabschnitte bzw. Kupplungsflansche (Scheiben).

Gemäß einem Ausführungsbeispiel weisen alle Raumzellen der Gitterstruktur eine einheitliche Konstellation von Gitterstrukturelementen, insbesondere Gitterstäben auf, z.B. jeweils vier in einer Mantelhüllfläche liegende und in radialer Blickrichtung bevorzugt rautenförmig angeordnete Gitterstrukturelemente, insbesondere Gitterstäbe, die an vier Knotenpunkten über zumindest annähernd radial ausgerichtete Gitterstrukturelementen mit den Gitterstrukturelementen einer jeweiligen radial benachbarten Knoten-Mantelhüllfläche verknüpft sind. Dies begünstigt noch weiter die hier beschriebene vergleichsweise einfache Art und Weise der Größenskalierung für die Gitterstruktur bzw. für die gesamte Kupplungseinrichtung. Als einheitliche (geometrische) Konstellation ist dabei insbesondere ein geometrisch einheitlicher Aufbau der relativen Anordnung der Gitterstrukturelemente bzw. Gitterstäbe einer Raumzelle zu verstehen, der unabhängig von der Größenskalierung ist. Wahlweise kann der Querschnitt (Betrag) und/oder die Querschnittskontur des jeweiligen Gitterstrukturelements bzw. Gitterstabs dabei insbesondere als Funktion der Radialposition variieren; unabhängig davon bleibt die von den Gitterstrukturelementen einer Raumzelle definierte Geometrie (bzw. das umgrenzte Raumzellenvolumen) dabei geometrisch gleich. Dies begünstigt nicht zuletzt auch eine Größenskalierung und auch möglichst hohe Variabilität z.B. hinsichtlich der Ausgestaltung des elastischen Kupplungsabschnitts zur Achsmitte hin (z.B. Vollmaterial, scheibenartige Stege, oder auch gar kein Material, also hohlzylindrische Ausgestaltung).

Beispielsweise ist eine jeweilige Raumzellen durch vier (oder mehr) in einer ersten Mantelhüllfläche angeordnete Gitterstrukturelemente, insbesondere Stäbe und durch vier (oder entsprechend mehr) in einer zweiten Mantelhüllfläche angeordnete Gitterstrukturelemente, insbesondere Stäbe und durch vier (oder entsprechend mehr) zumindest annähernd radial ausgerichtete Gitterstrukturelemente, insbesondere Stäbe gebildet, z.B. durch zwölf Stäben bzw. zwölf Stababschnitte, die mit einer benachbarten Raumzelle ineinander übergehen, und durch acht Knotenpunkte miteinander verknüpft sind.

Die hier beschriebene Gitterstruktur ist auch hinsichtlich Wärmehaushalt bzw. effektivem Abtransport von Wärme und hinsichtlich möglichst frei einstellbarer Nachgiebigkeit vorteilhaft eine zumindest im Wesentlichen offenzellige Gitterstruktur bestehend aus zumindest im Wesentlichen bevorzugt stabartigen Gitterstrukturelementen, die in Knotenpunkten miteinander verknüpft sind. Anders ausgedrückt: Besonders bevorzugt umfasst die hier beschriebene Gitterstruktur keine flächigen Materialabschnitte, insbesondere auch keine flächigen Materialabschnitte mit flächiger Erstreckung zwischen lasttragenden bevorzugt stabartigen Strukturelementen, sondern ist zumindest im Wesentlichen zumindest in den radial weiter außenliegenden Abschnitten aus im Wesentlichen zweidimensionalen bevorzugt stabartigen Gitterstrukturelementen aufgebaut, die in Knotenpunkten verknüpft sind und ansonsten das umgrenzte Volumen nicht weiter umhüllen.

Gemäß einem Ausführungsbeispiel erstreckt sich die (materialelastische) Gitterstruktur integral-einstückig dreidimensional sowohl in axialer und radialer Richtung als auch in Umfangsrichtung zwischen der ersten und zweiten Kupplungsseite. Dies begünstigt nicht zuletzt auch eine Konfiguration bzw. Konstruktion, bei welcher die Gitterstruktur auch dann als einziger elastischer Abschnitt der Kupplung zum Einsatz kommen mag, wenn eine/die Elastizität in mehreren Raumrichtungen sichergestellt sein soll, insbesondere auch bei in allen drei Raumrichtungen und/oder um alle drei Raumachsen geforderter Elastizität.

Als integral-einstückig ist hier insbesondere eine bereits durch das jeweils gewählte Fertigungsverfahren vorgegebene integrale Konfiguration zu verstehen, zumindest betreffend den elastischen Part der Kupplungseinrichtung (also die Gitterstruktur), und wahlweise auch betreffend die zu kuppelnden Anschlussseiten. Sofern die hier beschriebene Kupplungseinrichtung als integral-einstückig Kupplungseinrichtung beschrieben ist, so ist darunter zumindest eine integral-einstückige Ausgestaltung der ersten und zweiten Kupplungsseite und der Gitterstruktur in Verbindung miteinander zu verstehen, vorteilhaft demnach eine integral-einstückig Ausgestaltung der Kupplungseinrichtung als solcher, abgesehen von den optional z.B. als separate Maschinenelemente einsetzbaren Kupplungsmitteln (insbesondere Gewindehülsen), welche jedoch wahlweise ebenfalls integral-einstückig implementiert sein können, z.B. als Gewindebohrungen in den jeweiligen Höckern der hier beschriebenen Anschlussscheiben.

Gemäß einem Ausführungsbeispiel erstreckt sich die (materialelastische) Gitterstruktur (im Radialschnitt) zumindest annähernd über den gesamten Radialquerschnitt (orthogonal zur Längsachse geschnitten) der Kupplungseinrichtung (gegebenenfalls ausgenommen ein kleiner zentrischer Radialbereich), wahlweise bei vollzylindrischer Geometrie oder bei hohlzylindrischer Ausgestaltung ausgenommen ein sich z.B. im Bereich von 10, 20 oder 30% der absoluten Radialerstreckung erstreckender zentrischer Bereich, der entweder als zentrische Kavität oder als zentrischer Bereich massiven Materialaufkommens jeweils ohne Gitterstruktur ausgestaltet sein kann. Anders ausgedrückt: In geometrischer Hinsicht kann die Gitterstruktur zumindest diejenige Querschnittsfläche abdecken bzw. überlappen, welche von einem Anschluss oder Flansch oder dergleichen Schnittstelle zum jeweils benachbarten Triebstrangabschnitt eingenommen wird, und sich wahlweise auch darüber hinaus (radial) erstrecken. Dies begünstigt nicht zuletzt auch eine vergleichsweise hohe Robustheit bzw. Kraft-/Drehmomentübertragbarkeit selbst bei vergleichsweise filigraner Gitterstruktur. Nicht zuletzt kann dadurch die Vorgabe der Elastizitätseigenschaften auf noch gezieltere Weise erfolgen.

Gemäß einem Ausführungsbeispiel umfasst die mittels der (materialelastischen) Gitterstruktur implementierte Elastizität zumindest auch eine Drehelastizität. Dies begünstigt nicht zuletzt auch einen Ausgleich von Drehmomentspitzen sowie eine gewisse Dämpfung von sehr großen/schnellen Drehmoment-Änderungen, die z.B. potentiell im Bereich der Elektromobilitäts-Antriebe generiert werden. Es ist zu verstehen, dass die erfindungsgemäße Gitterstruktur-Architektur nicht nur eine Drehelastizität, sondern auch eine axiale Elastizität und/oder eine Elastizität hinsichtlich Radialversatz und/oder eine Elastizität hinsichtlich Winkelversatz sicherstellen kann und auch bezüglich der jeweiligen Raumrichtung oder Raumachse vorteilhaft einfach ausgelegt und dimensioniert werden kann.

Gemäß einem Ausführungsbeispiel ist die elastische Kupplungseinrichtung, insbesondere die Gitterstruktur integral-einstückig zwischen einen ersten Abschnitt eines/des entsprechenden Triebstrangs und einen damit zu kuppelnden zweiten Abschnitt des Triebstrangs kuppelbar, z.B. mittels Schraubverbindungen, vorteilhaft stirnseitig. Dies ermöglicht auch, die elastische Kupplungseinrichtung im Wesentlichen basierend auf der Gitterstruktur auszulegen und direkt in den Triebstrang zu kuppeln/flanschen, insbesondere in einer Konfiguration, bei welcher die Gitterstruktur beidseitig integral-einstückig in die kuppelnden Schnittstellen (z.B. Scheiben) übergeht.

Gemäß einem Ausführungsbeispiel ist die elastische Kupplungseinrichtung durch einen einzigen integral-einstückigen elastischen Kupplungsabschnitt gebildet, dessen Elastizität (bzw. Steifigkeit) durch die/ihre (wenigstens eine) Gitterstruktur definiert ist, und der beidseitig in den Triebstrang kuppelbar ist, insbesondere stirnseitig verschraubbar ist. Dies erhöht auch die Variabilität und erleichtert die Einbindung in den Triebstrang und begünstigt nicht zuletzt auch einen möglichst geringen Platzbedarf (axial und/oder radial).

Gemäß einem Ausführungsbeispiel stellt die Gitterstruktur eine integral-einstückige Anbindung (Verbindungs-/Kupplungsschnittstelle) zu wenigstens einer der ersten und zweiten Kupplungsseiten bereit, insbesondere zu beiden Kupplungsseiten. Dies liefert auch weitere Vorteile insbesondere in Hinblick auf ein robustes und langlebiges und in der Teileanzahl minimiertes/minimalistisches Bauteil.

Gemäß einem Ausführungsbeispiel ist die Gitterstruktur aus Gitterstrukturelementen, insbesondere Gitterstäben mit wahlweise als Funktion der Radialposition vordefinierbarem Durchmesser und/oder Querschnittsprofil gebildet, insbesondere aus sowohl in axialer oder axial-diagonaler als auch in radialer Richtung und in Umfangsrichtung ausgerichteten Gitterstrukturelementen, insbesondere mit im Querschnitt kreisrunden Gitterstrukturelementen, insbesondere Gitterstäben. Dies begünstigt nicht zuletzt eine stark variable Skalierbarkeit bzw. eine Einstellbarkeit der Elastizitätseigenschaften in mehreren bzw. allen Raumrichtungen, insbesondere unter Bezugnahme auf die Ausgestaltung einzelner Gitterstrukturelemente bzw. bei Vorgabe einer bestimmten Raumzelle oder eines bestimmten Aufbaus der Raumzelle. Anders ausgedrückt: Die Gitterstrukturelemente erstrecken sich sowohl in axialer oder axial-diagonaler als auch in radialer Richtung, beispielsweise bei kreuzförmig zueinander ausgerichteter Anordnung. Die einzelnen Gitterstrukturelemente sind nicht notwendigerweise entweder streng axial oder radial oder in Umfangsrichtung ausgerichtet, sondern können diese Raumrichtungen auch gemeinsam in jeweils individueller/schräger Ausrichtung abdecken.

Gemäß einem Ausführungsbeispiel ist zumindest eine Untergruppe der Gitterstrukturelemente, insbesondere Gitterstäbe in einer Seitenansicht kreuzförmig relativ zueinander angeordnet, insbesondere paarweise Gitterstäbe einer jeweiligen Raumzelle. Dies begünstigt nicht zuletzt auch eine vergleichsweise robuste Implementierbarkeit der Elastizitätseigenschaften in dreidimensionaler Hinsicht.

Gemäß einem Ausführungsbeispiel stützt sich zumindest eine Untergruppe der Gitterstrukturelemente, insbesondere Gitterstäbe einer jeweiligen Raumzelle parallelogrammartig aneinander ab innerhalb einer Mantelhüllfläche (bzw. auf demselben Radius bzw. Durchmesser), insbesondere bei in radialer Ansicht rautenförmiger Kontur von axial ineinander übergehenden Ebenen von Raumzellen. Dies liefert auch einen guten Kompromiss aus Einstellbarkeit, Robustheit, Skalierbarkeit, Materialeinsatz.

Gemäß einem Ausführungsbeispiel ist die Gitterstruktur basierend auf einer Vielzahl von Raumzellen jeweils aus Gitterstrukturelementen, insbesondere Gitterstäben mit wahlweise als Funktion der Radialposition vordefinierbarem Durchmesser und/oder Querschnittsprofil aufgebaut, insbesondere tortenstückartigen Raumzellen umfassend im Winkel von 90° und/oder 45° und/oder sich paarweise zu 180° ergänzenden Winkeln relativ zueinander ausgerichtete Gitterstrukturelemente, insbesondere Gitterstäbe. Ein solcher Aufbau begünstigt auch eine möglichst variable anwendungsspezifische Auslegung bzw. Implementierung, sei es größentechnisch, sei es hinsichtlich der Elastizitätseigenschaften.

Gemäß einem Ausführungsbeispiel ist die Gitterstruktur und damit der wenigstens eine elastische Kupplungsabschnitt der elastischen Kupplungseinrichtung (dreidimensional) größenskalierbar basierend auf einer Vielzahl von Raumzellen jeweils aus Gitterstrukturelementen, insbesondere Gitterstäben aufgebaut, insbesondere größenskalierbar sowohl in radialer als auch in axialer Raumrichtung. Dies ermöglicht auch eine Skalierung ausgehend von einer/der Raumzelle, ohne dass weitere Komponenten der Kupplung angepasst werden müssen, also weder irgendwelche Flanschabschnitte noch irgendwelche starren Kupplungsabschnitte, welche mit irgendwelchen elastischen (Elastomer-)Elementen interagieren bzw. ineinandergreifen (so wie dies z.B. bei klassischen Klauenkupplungen zu bewerkstelligen wäre).

Gemäß einem Ausführungsbeispiel ist die elastische Gitterstruktur durch eine Mehrzahl von in axialer Richtung aneinandergrenzenden Raumzellen(ebenen) gebildet, z.B. drei Raumzellen axial nebeneinander ineinander übergehend. Dies begünstigt einerseits eine integral-einstückige Anbindung an der jeweiligen Kupplungsseite, andererseits wenigstens ein mittiges radiales Raumzellenvolumen bzw. wenigstens zwei mittige radiale Knotenpunktebenen, in welcher die Gitterstruktur ganz frei von einer Anbindung an eine mehr oder weniger starre Kupplungsseite (z.B. stirnseitige Scheibe) elastisch arbeiten kann. Dabei können die drei (Knotenpunkt)Ebenen in der radialen Ansicht auch sechs ineinander (in Umfangsrichtung jeweils versetzt zueinander) übergehende rautenförmige Konturen umfassen.

Es ist zu verstehen, dass die hier beispielhaft genannte Anzahl von drei Raumzellen bzw. den damit definierten Knotenpunktebenen lediglich ein bestimmten Ausführungsbeispiel erläutert, insbesondere ein Ausführungsbeispiel, bei welchem in/bezüglich wenigstens einer Raumrichtung eine vordefinierte Steifigkeit über diese spezielle Anzahl von Raumzellen vorteilhaft erzielt werden kann. Im Rahmen der vorliegenden Erfindung hat sich gezeigt, dass die Steifigkeit auch durch eine zahlenmäßige Skalierung der Anzahl der Raumzellen in axialer und/oder radialer Richtung vordefiniert werden kann, insbesondere vergleichsweise exakt und auf einfache Weise bei Skalierung in axialer Richtung (abnehmende Steifigkeit bzw. steigende Elastizität mit größer werdender Anzahl). Insofern ermöglicht die erfindungsgemäße Raumzellen-Architektur eine vorteilhaft exakte Definition einer Vielsteifigkeit, also spezifischer Steifigkeitsvorgaben in/bezüglich einer Mehrzahl von Raumrichtungen, insbesondere ohne dass zusätzliche Elastomerkomponenten/-elemente erforderlich werden.

Gemäß einem Ausführungsbeispiel weist die elastische Gitterstruktur eine erste Knotenpunktebene auf, welche eine integral-einstückige Anbindung zur ersten Kupplungsseite sicherstellt, und/oder die elastische Gitterstruktur weist eine zweite Knotenpunktebene auf, welche eine integral-einstückige Anbindung zur zweiten Kupplungsseite sicherstellt. Dies begünstigt insbesondere auch einen den möglichst einfachen teilereduzierten, bevorzugt integral-einstückigen Aufbau der Kupplungseinrichtung.

Es ist zu verstehen, dass die hier beschriebene Gitterstruktur in konstruktiver Hinsicht derart ausgelegt/auslegbar ist, dass eine axiale Fortführung des Triebstrangs mittels der Gitterstruktur realisierbar ist.

Gemäß einem Ausführungsbeispiel ist die Gitterstruktur aus Raumzellen gebildet ist oder umfasst zumindest derartige Raumzellen, welche in radialer Ansicht durch eine rautenförmige Anordnung von Gitterstrukturelementen, insbesondere Gitterstäben aufgebaut sind. Dies begünstigt auch eine vergleichsweise einfache dreidimensionale Skalierbarkeit. Mittels der Rauten-Kontur kann dabei auch ein jeweiliges Raumzellenvolumen vorteilhaft insbesondere in radialer Richtung vorgegeben werden, insbesondere derart, dass axial aneinandergrenzende Ebenen stetig ineinander übergehen.

Es ist zu verstehen, dass die Gitterstruktur wahlweise auch aus andersartig aufgebauten Raumzellen gebildet werden kann, z.B. aus würfelförmigen Raumzellen (mit oder ohne eine oder mehrere Diagonalstreben). In Abgrenzung zur Würfelgeometrie liefert die hier vornehmlich beschriebene Konfiguration jedoch den Vorteil, dass die Struktur bis zu einer Außenmantelfläche/-hülle (bzw. der entsprechenden Kontur) weitergeführt werden kann, ohne geometrisch angepasst werden zu müssen oder abgeschnitten werden zu müssen.

Gemäß einem Ausführungsbeispiel ist die Gitterstruktur durch eine Vielzahl von miteinander in Knotenpunkten verbundenen und sich jeweils auf einer zylindrischen Hülle um die Rotationsachse erstreckenden Raumzellen-Grundflächen gebildet, welche vorteilhaft über zumindest annähernd radial ausgerichtete Gitterstrukturelemente, insbesondere Gitterstäbe in den Knotenpunkten miteinander verbunden sind. Dies begünstigt auch ein vorteilhaftes Design insbesondere im Bereich der außenliegenden und wahlweise auch einer/der innenliegenden Mantelfläche bzw. Hülle der Gitterstruktur-Architektur.

Wahlweise sind unterschiedliche Arten von Raumzellen-Grundflächen miteinander in der Vielzahl von Knotenpunkten zur Gitterstruktur verknüpft. Vorteilhaft wird jede Raumzellen-Grundfläche ausgehend von radial innen bis radial außen zur Außenkontur der Gitterstrukturhülle weitergeführt, ohne unterbrochen oder geometrisch abgewandelt zu werden, allenfalls bei/mit Größenskalierung.

Gemäß einem Ausführungsbeispiel wird die Gitterstruktur durch eine Vielzahl von zylindrischen Netzen von miteinander verbundenen Raumzellen-Grundflächen gebildet, wobei die zylindrischen Netze in radialer Richtung durch Gitterstrukturelemente, insbesondere Gitterstäbe miteinander verbunden sind. Dies begünstigt auch eine Architektur, die besonders einfach größenskaliert werden kann.

Gemäß einem Ausführungsbeispiel ist die Gitterstruktur aus Kunststoff gebildet, insbesondere additiv durch 3D-Druck hergestellt. Eine derartige Materialauswahl ermöglicht auch weitere Gewichts- und Kostenminimierungen und kann auch den Herstellungsprozess, insbesondere ein additives Herstellungsverfahren, vorteilhafter implementierbar machen. Vorteilhaft ist die gesamte elastische Kupplungseinrichtung aus dem einen Material (hier: Kunststoff, z.B. Polyamid PA12, wahlweise mit Faseranteil) ausgebildet. Es ist zu verstehen, dass zwecks belastbarer Verbindung zum jeweiligen Triebstrangabschnitt auch metallische Gewindehülsen in die Höcker der Kupplungsseiten eingebracht werden können, z.B. indem diese in additiv gefertigte Innengewinde geschnitten werden. Derartige anwendungsspezifische Optimierungs-Maßnahmen für die Einbindung der Kupplungseinrichtung in einen Triebstrang ändern nichts an der vorliegenden technischen Lehre, die elastische Kupplungseinrichtung als solche vorteilhaft aus nur einem einzigen Material bzw. Werkstoff bereitstellen zu können.

Gemäß einem Ausführungsbeispiel ist die Gitterstruktur aus Metall gebildet, insbesondere additiv durch 3D-Druck hergestellt. Hierdurch kann nicht zuletzt auch eine besonders hohe Robustheit und Kraft-/Drehmomentübertragbarkeit insbesondere auf kleinem Raum bzw. bei geringen Platzanforderungen sichergestellt werden. Vorteilhaft ist die gesamte elastische Kupplungseinrichtung aus dem einen Material (hier: Metall) ausgebildet.

Der Fachmann kann ausgehend von der vorliegenden Offenbarung eine anwendungsspezifisch optimierte Materialauswahl treffen. Dank des hier beschriebenen additiven Fertigungsansatzes kann dabei das Konzept der Gitterstruktur weitgehend materialunabhängig realisiert werden. Anders ausgedrückt: Die Materialauswahl kann als weiterer konstruktiver Parameter bzw. Auslegungsparameter erachtet werden, ist also weniger als bisher eine limitierende Vorgabe. Auf diese Weise kann nicht zuletzt auch das Einsatzspektrum für die Kupplungseinrichtung bzw. für die entsprechend ausgerüsteten Triebstränge erweitert werden, z.B. auch für hohe Betriebs- und/oder Umgebungs-Temperaturen.

Gemäß einem Ausführungsbeispiel weist die elastische Kupplungseinrichtung eine erste Flanschseite und eine zweite Flanschseite auf, wobei die elastische Kupplungseinrichtung mit der ersten und zweiten Flanschseite axial zwischen den ersten und zweiten Abschnitt des entsprechenden Triebstrangs kuppelbar ist, vorteilhaft bei einstückiger Ausgestaltung der elastischen Kupplungseinrichtung. Dies vereinfacht nicht zuletzt sowohl die Implementierung der Kupplungseinrichtung bzw. des jeweiligen Triebstrangs als auch die Eingliederung der Kupplungseinrichtung in den Triebstrang.

Gemäß einem Ausführungsbeispiel ist die elastische Kupplungseinrichtung in Ausgestaltung als zwischen den ersten und zweiten Abschnitt des entsprechenden Triebstrangs flanschbares elastisches Kupplungselement bereitgestellt/bereitstellbar, insbesondere jeweils stirnseitig flanschbar, z.B. an sechs bis acht (Schraub-)Verbindungspunkten.

Gemäß einem Ausführungsbeispiel ist die elastische Kupplungseinrichtung als elastisches Kupplungselement ausgestaltet, welches aus den folgenden integral-einstückig miteinander verbundenen Bestandteilen aufgebaut ist: erste flansch-/kuppelbare Scheibe, Gitterstruktur, zweite flansch-/kuppelbare Scheibe, insbesondere bei vollzylindrischer Ausgestaltung oder bei hohlzylindrischer Ausgestaltung oder bei hohlzylindrischer Gitterstruktur-Kontur in Kombination mit nach radial innen übergehenden scheibenartigen Stegen.

Die hier angedeuteten oder zumindest aus den Zeichnungsfiguren ersichtlichen Größenverhältnisse bieten jeweils grobe Anhaltspunkte für beispielhafte relative Abmessungen von Kupplung und angrenzenden Triebstrangabschnitten und zeigen auf, dass die hier beschriebene Kupplungseinrichtung vorteilhaft zwischen zwei Axialabschnitte des jeweiligen Triebstrangs gekuppelt werden kann.

Als Kupplungs- bzw. Verbindungs-Durchmesser ist gemäß der vorliegenden Offenbarung ein Bereich zu verstehen, in welchem mittels Verbindungsmitteln (z.B. Schrauben) eine kuppelnde Anbindung zur Weiterführung des Triebstrangs erstellt werden kann. Das Kuppeln ist dabei die durch das Verbinden in z.B. einzelnen Verbindungspunkten mittels Verbindungsmitteln (z.B. Schrauben) erzielte Wirkung, hier ein elastisches Kuppeln erzielt durch den über die beidseitige Anbindung realisierten axialen Einbau der (material)elastischen Gitterstruktur.

Gemäß einem Ausführungsbeispiel ist an wenigstens einer der Kupplungsseiten eine Zentrierung vorgesehen, vorteilhaft integral-einstückig. Vorteilhaft ist die Zentrierung durch Nocken oder Absätzen oder Umfangssegmentkanten an einer jeweiligen Erhebung zur Aufnahme von Kupplungsmitteln wie z.B. Gewindehülsen vorgesehen.

Gemäß einem Ausführungsbeispiel geht der elastische Kupplungsabschnitt zur ersten Kupplungsseite und/oder zur zweiten Kupplungsseite hin in eine Scheibe oder dergleichen Flanschabschnitt über, an welcher Kupplungsmittel vorgesehen sind (wahlweise als separate Maschinenelemente oder integral-einstückig), beispielsweise kreisförmig angeordnet jeweils für eine Schraubverbindung (z.B. Gewindebohrungen oder Gewindehülsen). Dies begünstigt einerseits den hier beschriebenen vergleichsweise einfachen und robusten Aufbau der Kupplungseinrichtung, andererseits auch ein einfaches Montage- bzw. Eingliederungskonzept (in der Art eines axialen Verbauens eines Monoblocks ohne weitere Teile, ohne weiteres In-Eingriff-Bringen weiterer Komponenten).

Gemäß einem Ausführungsbeispiel sind die Kupplungsmittel (insbesondere in Ausgestaltung als Gewindehülsen) in die (jeweilige) Scheibe oder dergleichen Flanschabschnitt eingelassen, beispielsweise metallische Gewindeeinsätze eingelassen in Erhebungen (Höcker) oder Aufnahmen an der Scheibe, insbesondere indem die Kupplungsmittel mittels Außengewinde in additiv gefertigte Innengewinde gedreht bzw. in eine zylindrische Ausnehmung geschnitten werden. Anders ausgedrückt: Wahlweise kann ein gedrucktes bzw. additiv gefertigtes Innengewinde vorgesehen sein, wahlweise ein Sackloch. Dies begünstigt auch eine möglichst umfassende Realisierung des hier beschriebenen bevorzugt integral-einstückigen konstruktiven Konzepts der Kupplungseinrichtung, vorteilhaft mit verbleibender Variabilität insbesondere bezüglich der Anbindung an den Triebstrang bzw. bezüglich der verwendbaren Verbindungsmittel. Beispielsweise sind Gitterstruktur und Scheibe(n) aus Kunststoff hergestellt, und die Kupplungsmittel bestehen aus Metall und werden stoffschlüssig und/oder form-/kraftschlüssig mit der Scheibe verbunden. Der Fachmann kann basierend auf der vorliegenden Offenbarung je nach Anwendungsfall entscheiden, ob einer integral-einstückigen Implementierung auch der Kupplungsmittel oder einem Einbetten von Kupplungsmitteln in Ausgestaltung als separate Maschinenelemente der Vorzug zu geben ist.

Gemäß einem Ausführungsbeispiel ist die Elastizität (bzw. Steifigkeit) der elastischen Kupplungseinrichtung ausschließlich mittels der Gitterstruktur sichergestellt, insbesondere sowohl in axialer und/oder radialer Raumrichtung als auch um wenigstens eine Raumachse. Dies begünstigt auch die Realisierung eines Kupplungskonzeptes, welches vollständig ohne Elastomer-Elemente auskommt.

Gemäß einem Ausführungsbeispiel ist die elastische Kupplungseinrichtung eingerichtet für einen/den Drehzahlbereich größer 8.000U/min, insbesondere größer 15.000U/min (Hochdrehzahlbereich bis mindestens 20.000 U/min), bevorzugt größer 20.000U/min. Dies erweitert das Anwendungsfeld nicht zuletzt auch hinsichtlich Prüfständen und/oder besonders schnelllaufender Elektroantriebe.

Gemäß einem Ausführungsbeispiel weist die Gitterstruktur eine zumindest hinsichtlich der Grundform der dreidimensionalen Raumzellen regelmäßige Struktur auf. Dies erleichtert eine Größen- und Kraft- bzw. (Dreh-)Momentanpassung (bzw. Steifigkeitsanpassung), insbesondere indem in axialer Richtung und/oder in radialer Richtung eine anwendungsspezifische Skalierung bei gleichbleibender Anordnung der Raumzellen relativ zueinander bzw. bei gleichbleibender relativer Position der Knotenpunkte zueinander erfolgt.

Die zuvor genannte Aufgabe wird insbesondere gelöst durch eine elastische Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite wenigstens ein elastischer Kupplungsabschnitt ausgebildet ist; wobei der wenigstens eine elastische Kupplungsabschnitt durch eine sich zumindest auch in radialer Richtung erstreckende Gitterstruktur aus dreidimensionalen Raumzellen gebildet ist, welche zumindest einen Axialabschnitt der elastischen Kupplungseinrichtung drehmomentübertragend überbrückt, wobei eine jeweilige dreidimensionale Raumzelle die geometrische Form eines Zylindersegments oder Hohlzylindersegments einnimmt oder zusammen mit in radialer Richtung benachbarten weiteren Raumzellen das (Hohl-)Zylindersegment bildet, wobei die Gitterstruktur eine Vielzahl von Knotenpunkten auf einer Mehrzahl von Teilkreisen umfasst, insbesondere radial und axial versetzten Teilkreisen, wobei die Gitterstruktur eine erste radiale Knotenpunktebene aufweist, welche eine integral-einstückige Anbindung zur ersten Kupplungsseite sicherstellt, und/oder wobei die elastische Gitterstruktur eine zweite radiale Knotenpunktebene aufweist, welche eine integral-einstückige Anbindung zur zweiten Kupplungsseite sicherstellt. Dies kann zahlreiche der hier genannten Vorteile in Kombination miteinander sicherstellen.

Die zuvor genannte Aufgabe wird auch gelöst durch einen Triebstrang, insbesondere Antriebsstrang oder Prüfstands-Triebstrang, aufweisend wenigstens eine zwischen einen ersten und zweiten Abschnitt gekuppelte oder anderweitig verbaute elastische Kupplungseinrichtung gemäß der vorliegenden Offenbarung. Hierdurch ergeben sich zuvor genannte Vorteile.

Die zuvor genannte Aufgabe wird auch gelöst durch ein Verfahren gemäß dem entsprechenden nebengeordneten Verfahrensanspruch, nämlich durch ein Verfahren zum Herstellen einer elastischen Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite wenigstens ein elastischer Kupplungsabschnitt ausgebildet ist/wird, welcher durch eine sich zumindest auch in radialer Richtung erstreckende Gitterstruktur aus dreidimensionalen Raumzellen gebildet ist/wird, welche additiv erstellt ist/wird und sich integral-einstückig zwischen der ersten und zweiten Kupplungsseite erstreckt und bei bestimmungsgemäßer Anordnung im Triebstrang den entsprechenden räumlichen Axialabschnitt ohne zusätzliche (starre oder elastische) Komponenten mittels der Gitterstruktur überbrückt. Hierdurch ergeben sich zuvor genannte Vorteile, insbesondere auch in Hinblick auf den Verzicht auf Elastomer-Komponenten, insbesondere hinsichtlich möglichst einstückigem, robustem und anwendungsspezifisch variablem Design.

Gemäß einer Ausführungsform wird die Gitterstruktur in einstückig-integraler Ausgestaltung mit zumindest einer der kuppelbaren Kupplungsseiten der elastischen Kupplungseinrichtung additiv hergestellt, bevorzugt in einstückig-integraler Verbindung mit beiden kuppelbaren Kupplungsseiten der elastischen Kupplungseinrichtung. Dies begünstigt auch die Erstellung der Kupplungseinrichtung in integral-einstückiger Ausgestaltung auch betreffend die Flanschseiten, so dass die Kupplungseinrichtung als besonders teile- und gewichtsreduziertes Design bereitgestellt werden kann.

Gemäß einer Ausführungsform wird die Gitterstruktur additiv hergestellt, indem die Gitterstruktur ausgehend von einer dreidimensionalen Raumzelle in wenigstens einer Raumrichtung größenskaliert wird, insbesondere in mehreren radialen Ebenen jeweils umfassend eine Vielzahl von integral-einstückig ineinander übergehenden Raumzellen. Dies erleichtert nicht zuletzt auch die größentechnische Anpassung an einen jeweiligen Anwendungsfall. Eine Skalierung in axialer Richtung kann dabei vor einem anderen Zweck durchgeführt werden als eine Skalierung in radialer Richtung. Wahlweise ist die Gitterstruktur dabei nur in einer Raumrichtung oder -ebene regelmäßig. Anders ausgedrückt: Auch bei räumlicher Skalierung können flächige und/oder unregelmäßige Abschnitte implementiert sein/werden.

Demnach ist zu verstehen, dass die Gitterstruktur in geometrischer Hinsicht sowohl regelmäßig als auch unregelmäßig ausgestaltet sein kann. Der Fachmann kann ausgehend von der vorliegenden Offenbarung für einen jeweiligen Anwendungsfall vorgeben, ob die Gitterstruktur bevorzugt (auch) unregelmäßige Abschnitte umfasst.

Es ist zu verstehen, dass die Gitterstruktur zumindest teilweise auch aus flächigen Abschnitten gebildet sein kann, ohne vom Konzept eines gitterstrukturelementartigen, insbesondere stabartigen Aufbaus abweichen zu müssen. Zwar wird die Möglichkeit einer Belüftung und effektiven Wärmeabtransports von insbesondere durch Verformungsarbeit hervorgerufener Wärme durch flächige Abschnitte erschwert, dennoch mag der damit einher gehende Nachteil nicht derart gravierend sein, dass ein vollständiger Verzicht auf flächige Abschnitte, z.B. in radialer Erstreckungsebene, hier als sinnvoll oder gar notwendig erachtet werden müsste. Der Fachmann kann ausgehend von der vorliegenden Offenbarung für einen jeweiligen Anwendungsfall vorgeben, ob die Gitterstruktur bevorzugt auch flächige Abschnitte umfasst.

Somit ist hervorzugeheben, dass die hier beschriebene Gitterstruktur eine regelmäßige oder unregelmäßige Gitterstruktur sein kann, oder auch eine Gitterstruktur mit sowohl geometrisch regelmäßigen Abschnitten als auch geometrisch unregelmäßigen Abschnitten (oder auch Abschnitten chaotisch angeordneter Gitterstrukturelemente, insbesondere Gitterstäbe). Insoweit ist auch zu verstehen, dass die hier beschriebenen eine Gitterstruktur bildenden Raumzellen geometrisch regelmäßig und/oder geometrisch unregelmäßig ausgestaltet sein können. Vorteilhaft unberührt davon bleibt die Eigenschaft einer offenen Raumzelle, insbesondere hinsichtlich thermisch optimierter Ausgestaltung (Wärmeabtransport). Insoweit ist auch zu verstehen, dass die hier beschriebenen Knotenpunkte nicht notwendigerweise in der hier beispielhaft beschriebenen relativen Anordnung zueinander angeordnet sein müssen. Insbesondere kann die hier beschriebene Gitterstruktur vorteilhaft ausgehend von einer einzigen geometrisch vordefinierbaren Raumzelle oder wenigstens einer geometrisch vordefinierbaren Raumzelle in axialer und/oder radialer Richtung (größen)skaliert werden, insbesondere auf händische bzw. manuelle Weise. Alternativ oder zusätzlich kann insbesondere basierend auf computerimplementierbaren Algorithmen und computergestützten Hilfsmitteln rechnergestützt ermittelt werden, ob bzw. inwiefern die Gitterstruktur gegebenenfalls zumindest abschnittsweise vorteilhafter unregelmäßig und/oder flächig ausgestaltet ist/wird, beispielsweise durch Verschieben der Relativposition einzelner Knotenpunkte. Auch das jeweilige Gitterstrukturelement, insbesondere der jeweilige Gitterstab, muss demnach nicht notwendigerweise geradlinig ausgestaltet sein. Der Fachmann kann ausgehend von der vorliegenden Offenbarung für einen jeweiligen Anwendungsfall vorgeben, ob die Gitterstruktur bzw. in welchen Abschnitten die Gitterstruktur bevorzugt unregelmäßig und/oder flächig ausgestaltet/auszugestalten ist.

Beispielsweise kann vom Fachmann basierend auf der vorliegenden Offenbarung eine computerimplementierte Optimierung der Gitterstruktur initiiert werden, insbesondere indem iterativ basierend auf vorab vom Anwender/Fachmann definierten Zielparametern (z.B. Gewicht) bei gegebenen Randbedingungen (z.B. äußere Abmessungen, Lasteinleitungsstellen, Werkstofffestigkeit) ermittelt wird, welche Ausgestaltung der Gitterstruktur aus dreidimensionalen Raumzellen für den jeweiligen Anwendungsfall besonders vorteilhaft ist.

Gemäß einer Ausführungsform wird die Gitterstruktur ausgehend von einer Raumzelle additiv hergestellt, indem die Raumzelle basierend auf wenigstens einem Auslegungsparameter definiert wird und indem die Raumzelle in wenigstens einer Raumrichtung zahlenmäßig skaliert wird. Dies begünstigt einerseits einen großen Variantenreichtum an Gitterstrukturen, andererseits auch ein gezielt raumrichtungsspezifisches Auslegen und Skalieren. Beispielsweise wird der wenigstens eine Auslegungsparameter aus der folgenden Gruppe gewählt: zu übertragendes Drehmoment, wenigstens eine Zielsteifigkeit (insbesondere in Torsionsrichtung), Grundfestigkeit des Werkstoffs, Gewicht/Masse, Anzahl der in axialer Richtung aufeinanderfolgenden radialen Knotenpunktebenen bzw. Raumzellen, Anzahl der in radialer Richtung aneinandergrenzenden Raumzellen. Auch die Geometrie einer Raumzellen-Grundfläche kann als Auslegungsparameter zur Disposition stehen. Bei bereits vordefinierter Raumzellen-Grundfläche oder Raumzellen-Gesamtgeometrie mag das zu übertragende Drehmoment für die radiale Größe des elastischen Kupplungsabschnitts von besonderer Bedeutung sein, und für die Steifigkeit insbesondere in Torsionsrichtung mag die Anzahl der in axialer Richtung aufeinanderfolgenden Knotenpunktebenen von besonderer Bedeutung sein.

Die zuvor genannte Aufgabe wird auch gelöst durch eine elastische Kupplungseinrichtung für Triebstränge, mit einer ersten Kupplungsseite und einer zweiten Kupplungsseite, zwischen welchen ein elastischer Kupplungsabschnitt ausgebildet ist, welcher durch eine sich zumindest auch in radialer Richtung erstreckende materialelastische Gitterstruktur gebildet ist, insbesondere elastische Kupplungseinrichtung gemäß der vorliegenden Offenbarung, hergestellt durch ein Herstellungsverfahren gemäß der vorliegenden Offenbarung, insbesondere durch ein additives Verfahren, welches vorteilhaft eine integral-einstückige Verbindung der Gitterstruktur mit der ersten und/oder zweiten Kupplungsseite herbeiführt. Hierdurch lassen sich zuvor genannte Vorteile realisieren, insbesondere auch in Hinblick auf hohe Variabilität und gute Verfügbarkeit.

Die zuvor genannte Aufgabe wird auch gelöst durch ein Computerprogrammprodukt umfassend Befehle, die bei Ausführung des Computerprogrammproduktes auf einem Computer diesen dazu veranlassen, Schritte zum Steuern/Regeln eines Herstellungsverfahrens zum Herstellen einer Kupplungseinrichtung gemäß der vorliegenden Offenbarung auf dem Computer auszuführen, insbesondere Computerprogrammprodukt eingerichtet zum (geometrischen) Vorgeben einer Raumzelle zum kraft-/größenskalierbaren Erstellen einer/der integral-einstückigen materialelastischen Gitterstruktur aus einer Vielzahl von Raumzellen zum Bilden des zwischen zwei Abschnitten eines/des entsprechenden Triebstrangs kuppelbaren elastischen Kupplungsabschnitts der elastischen Kupplungseinrichtung. Dies ermöglicht basierend auf den zuvor genannten Vorteilen auch eine vergleichsweise einfache computergestützte Implementierung einer anwendungsspezifisch orientierten Konstruktion bzw. Auslegung der Kupplungseinrichtung. Eine solche computerimplementierte Optimierung der Gitterstruktur kann auch durch einen iterativen Ansatz erfolgen, insbesondere unter Berücksichtigung von anwendungsspezifisch vorgebbaren Randbedingungen wie z.B. äußere Abmessungen, Lasteinleitungsstellen, Werkstofffestigkeit.

Dabei kann das Computerprogramm nicht nur einen Herstellungsvorgang unterstützen, sondern auch einen/den Design-/Auslegungsvorgang unterstützen, insbesondere indem eine Korrelation von wenigstens zwei Parametern aus der folgenden Gruppe implementiert ist/wird und wahlweise auch im Kontext einer entsprechenden Benutzerschnittstelle visualisiert ist/wird: zu übertragendes Drehmoment, wenigstens eine Zielsteifigkeit (insbesondere in Torsionsrichtung), Grundfestigkeit des Werkstoffs, Gewicht/Masse, Anzahl der in axialer Richtung aufeinanderfolgenden radialen Knotenpunktebenen bzw. Raumzellen, Anzahl der in radialer Richtung aneinandergrenzenden Raumzellen. Eine Skalierung in axialer Richtung mag dabei vornehmlich als Auslegungsparameter hinsichtlich wenigstens einer Zielsteifigkeit genutzt werden (weicher mit größer werdender Anzahl der in axialer Richtung hintereinander gelegt Ebenen), und eine Skalierung in radialer Richtung mag dabei vornehmlich als Auslegungsparameter hinsichtlich zu übertragender Kräfte/Momente genutzt werden. In diesem Kontext ist auch eine regelmäßige Struktur von Vorteil, d.h., die Anwendungsvariabilität und Anpassbarkeit wird dadurch hoch gehalten, dass die Gitterstruktur vorteilhaft in zumindest einer Raumrichtung/-ebene regelmäßig ausgestaltet ist.

Insoweit wird die zuvor genannte Aufgabe auch im Rahmen einer Computerimplementierung gelöst durch einen Datenträger mit einem solchen darauf hinterlegtem Computerprogrammprodukt, bzw. durch einen entsprechenden Computer oder ein Computersystem oder eine virtuelle Maschine oder wenigstens ein Hardwareelement damit, bzw. durch ein Datenstrukturprodukt zur Verarbeitung von Programmcode für Steuerungs-/Regelungsvorgaben für eine Fertigungsmaschine (z.B. 3D-Drucker) bzw. für die hier beschriebenen Verfahrensschritte. Zumindest eine der zuvor genannten Aufgaben wird demnach auch gelöst durch ein Computerprogramm eingerichtet zum Bereitstellen der Steuerungs-/Regelungsvorgaben für eine Fertigungsmaschine bzw. für die hier beschriebenen Verfahrensschritte.

Die zuvor genannte Aufgabe wird auch gelöst durch eine Benutzerschnittstelle eingerichtet zum digitalen Spiegeln von Schritten eines Herstellungsverfahrens gemäß der vorliegenden Offenbarung, insbesondere eingerichtet zur Nutzerinteraktion beim Implementieren bzw. beim Nutzen eines/des hier beschriebenen Computerprogrammprodukts. Dies erleichtert nicht zuletzt eine bedarfsorientierte Erstellung der elastischen Kupplungseinrichtung vor Ort am jeweiligen Triebstrang, z.B. durch den Nutzer/Betreiber selbst mittels einer entsprechenden 3D-Druck-Einrichtung, so dass auch die Logistikkette verschlankt werden kann und Bereitstellungsschwierigkeiten z.B. an abgelegenen oder schwer zugänglichen Orten minimiert werden. Über die Benutzerschnittstelle können dabei die wesentlichen Auslegungsparameter abgefragt werden, wahlweise auch in Abhängigkeit voneinander angepasst werden z.B. in Hinblick auf größere Drehmomentsteifigkeit oder größere axiale Elastizität, und wahlweise kann über die Benutzerschnittstelle auch ein Kontakt zu einer Service-Fachkraft hergestellt werden, welche z.B. im Rahmen eines Online-Chat bei der Definition der Geometrie und/oder der Anzahl der Raumzelle(n) unterstützen kann (also beim Design-Prozess assistieren kann) oder Details zum anwendungsspezifischen Triebstrang abfragen kann, z.B. ergänzende Parameter wie Umgebungseinflüsse (Feuchte, Temperatur, UV-Einstrahlung oder dergleichen).

Die zuvor genannte Aufgabe wird auch gelöst durch Verwendung einer elastische Kupplungseinrichtung gemäß der vorliegenden Offenbarung in einem Triebstrang aus der folgenden Gruppe: Antriebstrang insbesondere für industrielle Anwendungen, Prüfstands-Triebstrang insbesondere zur Erprobung schnelllaufender Antriebe für die Elektromobilität, Triebstrang im bzw. ausgelegt für den Hochdrehzahlbereich, Triebstrang insbesondere für Baumaschinen, Fahrzeuge, mobile Vorrichtungen für Logistik und Mobilität. Hierdurch lassen sich jeweils zuvor genannte Vorteile realisieren, insbesondere auch in Hinblick auf vergleichsweise einfache und spezifische Individualisierbarkeit der Kupplungseinrichtung für den jeweiligen Anwendungsfall.

Die zuvor genannte Aufgabe wird auch gelöst durch Verwendung einer integral-einstückigen materialelastischen Gitterstruktur aus sich auch in radialer Richtung erstreckenden dreidimensionalen Raumzellen zum Bereitstellen eines/des elastischen Kupplungsabschnitts einer elastischen Kupplungseinrichtung für Triebstränge zwischen einer ersten und zweiten Kupplungsseite der elastischen Kupplungseinrichtung bzw. zwischen einem ersten und zweiten Abschnitt eines/des entsprechenden Triebstrangs, insbesondere zum Bereitstellen einer elastischen Kupplungseinrichtung gemäß der vorliegenden Offenbarung, wobei mittels des strukturellen Aufbaus der integral-einstückigen materialelastischen Gitterstruktur die Elastizität (bzw. Steifigkeit) der Kupplung (bzw. der elastischen Kupplungseinrichtung) definiert wird, in wenigstens einer Raumrichtung und/oder bezüglich wenigstens einer Raumachse jeweils zumindest umfassend die axiale und/oder radialer Richtung (in Bezug auf den Triebstrang), vorteilhaft in mehreren Raumrichtungen zumindest umfassend die axiale und radialer Richtung und um mehrere Raumachsen. Hierdurch lassen sich zuvor genannte Vorteile realisieren, insbesondere in Hinblick auf ein sehr variabel und robust realisierbares konstruktives Konzept, bei welchem auch komplett auf Elastomer-Elemente verzichtet werden kann.

Zusammenfassung: Elastische Kupplungen für Triebstränge, z.B. auch für Prüfstände, müssen bei zahlreichen Anwendungen hohen Anforderungen genügen und auch anwendungsspezifisch optimiert werden können. Im hohen Drehzahlbereich verschärfen sich die Anforderungen weiter, z.B. hinsichtlich Wärmehaushalt, Lebensdauer, Massenträgheitseffekten. Bereitgestellt wird eine elastische Kupplungseinrichtung für Triebstränge, aufweisend eine mit einem ersten Abschnitt eines/des entsprechenden Triebstrangs kuppelbare erste Kupplungsseite und eine mit einem zweiten Abschnitt des Triebstrangs kuppelbare zweite Kupplungsseite, wobei zwischen der ersten und zweiten Kupplungsseite wenigstens ein elastischer Kupplungsabschnitt ausgebildet ist. Erfindungsgemäß ist der wenigstens eine elastische Kupplungsabschnitt durch eine sich zumindest auch in radialer Richtung erstreckende Gitterstruktur aus dreidimensionalen Raumzellen gebildet, welche zumindest einen Axialabschnitt der Kupplungseinrichtung ohne zusätzliche (starre oder elastische) Komponenten überbrückt. Hierdurch lässt sich ein vorteilhafter Kompromiss insbesondere aus Materialeinsatz, Elastizität bzw. Variabilität beim Einstellen der elastischen Eigenschaften, Eigengewicht, Robustheit und wärmetechnischer Eigenschaften bzw. Minimierung von Verlustarbeit auch im Hochdrehzahlbereich erzielen. Die vorliegende Erfindung betrifft ferner einen Triebstrang mit wenigstens einer solchen darin verbauten elastischen Kupplungseinrichtung, sowie ein Verfahren zum Herstellen einer solchen elastischen Kupplungseinrichtung, insbesondere in integral-einstückiger Ausgestaltung zumindest des materialelastischen Abschnitts der Kupplungseinrichtung, sowie die Verwendung einer Gitterstruktur zum Bereitstellen eines/des elastischen Kupplungsabschnitts.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
**Figur 1A** in einer perspektivischen Seitenansicht eine elastische Kupplungseinrichtung gemäß einem Ausführungsbeispiel;
**Figur 1B** in einer stirnseitigen Ansicht eine elastische Kupplungseinrichtung gemäß einem Ausführungsbeispiel, mit grafisch angedeuteten bzw. hervorgehobenen Teilkreis-Durchmessern und Knotenpunkten;
**Figur 1C** in einer Seitenansicht eine elastische Kupplungseinrichtung gemäß einem Ausführungsbeispiel;
**Figur 1D** in einer geschnittenen Seitenansicht (nämlich in einem axialen Längsschnitt) eine elastische Kupplungseinrichtung gemäß einem Ausführungsbeispiel;
**Figuren 2A, 2B** jeweils in einer Seitenansicht einen Triebstrang mit darin eingebundener bzw. gekuppelter elastischer Kupplungseinrichtung gemäß Ausführungsbeispielen;
**Figur 3A** in einer geschnittenen Ansicht in radialer Richtung einen Abschnitt von Raumzellen einer Gitterstruktur gemäß einem Ausführungsbeispiel einer elastischen Kupplungseinrichtung gemäß Ausführungsbeispielen, wobei die Gitterstruktur in dieser speziellen Konfiguration auf einer Raumzelle mit diagonalen Gitterstrukturelementen, insbesondere Diagonalstäben beruht;
**Figur 3B** in einer perspektivischen Ansicht ein Raumzellen-Zylindersegment eingerichtet zum räumlichen Skalieren zum Bilden einer Gitterstruktur einer elastischen Kupplungseinrichtung gemäß Ausführungsbeispielen;
**Figur 3C** in einer perspektivischen Detailansicht Raumzellen eines Zylindersegments einer Gitterstruktur gemäß einem Ausführungsbeispiel einer elastischen Kupplungseinrichtung gemäß Ausführungsbeispielen;
**Figuren 4A, 4B, 4C, 4D** jeweils in perspektivischer Detailansicht radial aneinandergrenzende Raumzellen jeweils einer Gitterstruktur gemäß Ausführungsbeispielen einer elastischen Kupplungseinrichtung gemäß Ausführungsbeispielen, bei variierendem radial innenliegenden Bereich der Gitterstruktur (Fig. 4A, 4B, 4C), Variation des Segmentwinkels (Fig. 4D);

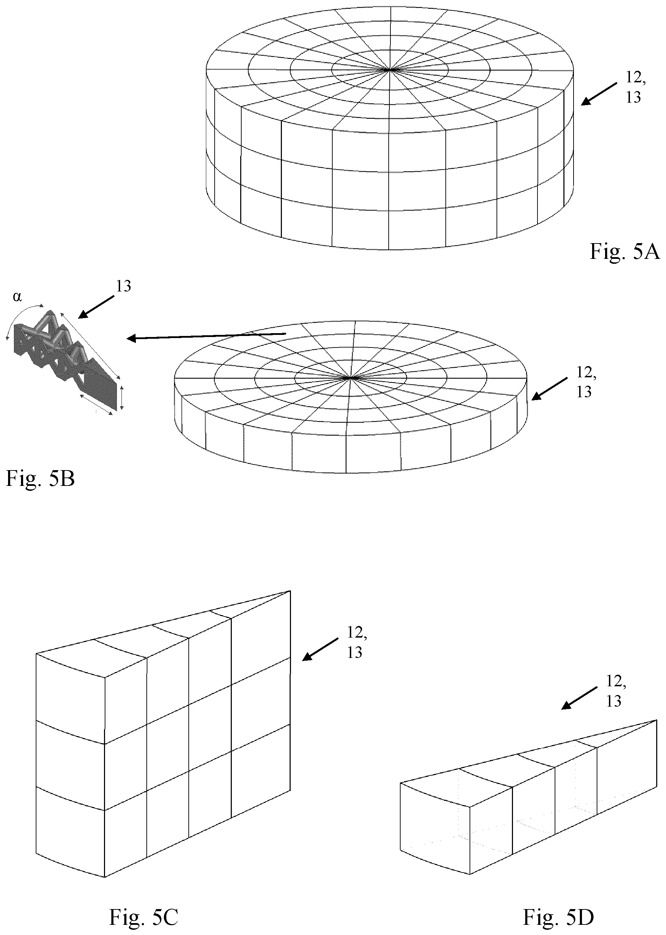

**Figuren 5A, 5B, 5C, 5D** jeweils in perspektivischer Ansicht in schematischer Darstellung eine geometrische Skalierung ausgehend von einem zylindrischen Raumzellen- bzw. Gitterstrukturvolumen zu einem Raumzellen-Zylindersegment mit nur radial aneinandergrenzenden Raumzellen (bzw. vice versa) zum Konzipieren oder Skalieren einer Gitterstruktur mit zylindrischem Gitterstrukturvolumen einer elastischen Kupplungseinrichtung gemäß Ausführungsbeispielen, wobei in Fig. 5B auch eine perspektivische Detailansicht eines Raumzellen-Zylindersegments zum Bilden einer/der Gitterstruktur einer elastischen Kupplungseinrichtung gemäß Ausführungsbeispielen gezeigt ist;
**Figuren 6A, 6B, 6C** jeweils in perspektivischer Ansicht in schematischer Darstellung eine geometrische Skalierung ausgehend von einem hohlzylindrischen Raumzellen- bzw. Gitterstrukturvolumen zu einem Raumzellen-Hohlzylindersegment (bzw. vice versa) zum Konzipieren oder Skalieren einer Gitterstruktur mit hohlzylindrischem Gitterstrukturvolumen einer elastischen Kupplungseinrichtung gemäß Ausführungsbeispielen;
**Figur 7** ein Ablaufdiagramm betreffend Herstellungsschritte eines Herstellungsverfahrens gemäß Ausführungsbeispielen;
**Figur 8** ein Ablaufdiagramm betreffend Montageschritte eines Montageverfahrens gemäß Ausführungsbeispielen;

### DETAILLIERTE BESCHREIBUNG DER FIGUREN

Die Erfindung wird zunächst unter allgemeiner Bezugnahme auf alle Bezugszeichen und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine elastische Kupplungseinrichtung 10 für Triebstränge 1, aufweisend eine mit einem ersten Abschnitt 1a des Triebstrangs kuppelbare erste Kupplungsseite 10a und eine mit einem zweiten Abschnitt 1b des Triebstrangs kuppelbare zweite Kupplungsseite 10b, wobei zwischen der ersten und zweiten Kupplungsseite wenigstens ein elastischer Kupplungsabschnitt 11 ausgebildet ist, welcher durch eine sich zumindest auch in radialer Richtung erstreckende Gitterstruktur 12 aus dreidimensionalen Raumzellen gebildet ist, welche zumindest einen Axialabschnitt der Kupplungseinrichtung 10 drehmomentübertragend und elastizitätsbegründend überbrückt. Vorteilhaft ist zumindest die Gitterstruktur 12 und wahlweise auch die gesamte Kupplungseinrichtung 10 als integral-einstückiger elastischer Kupplungsabschnitt 11 mit nur einer einzigen Kupplungskomponente 11.1 bereitgestellt, z.B. aus Kunststoff oder aus Metall. Vorteilhaft ist die Gitterstruktur 12 durch sich mehrdimensional erstreckende Gitterstrukturelemente, insbesondere Gitterstäbe 12.1 definiert, welche in Untergruppen jeweils eine Raumzelle 13 bilden können, basierend auf welcher sich die Gitterstruktur 12 in radialer und/oder axialer Richtung größenskalieren lässt. Die Gitterstrukturelemente bzw. Gitterstäbe 12.1 können derart ausgerichtet sein, dass sich mehrere Stege 12.3 in zumindest annähernd radialer Erstreckung ausbilden, insbesondere in der Art von Gitterstrukturebenen bzw. ersten, zweiten und gegebenenfalls weiteren Knotenpunktebenen E1, E2, Er zwischen der ersten und zweiten Kupplungsseite 10a, 10b.

Vorteilhaft geht die Gitterstruktur 12 beidseitig axial in Scheiben 14 oder dergleichen stirnseitige oder radial abstehende Flanschabschnitte über, und an den Scheiben sind Verbindungspunkten 14.1 vorgesehen, die vorteilhaft in Höckern 14.3 oder dergleichen in axialer Richtung ausgestalteter Erhebungen oder Verdickungen zur Aufnahme von Verbindungs-/Kupplungsmitteln angeordnet sind. An diesen Höckern 14.3 können vorteilhaft auch stirnseitige Anlage-/Anschlagflächen 14.5 vorgesehen sein, an welchen ein entsprechender Flanschteil 3 oder dergleichen Kupplungsteile des Triebstrangs 1 auf Stoß zur Anlage kommen kann. Als Verbindungsmittel 15 können insbesondere Schraubverbindungsmittel vorgesehen sein, und als Kupplungsmittel 16 z.B. Gewindehülsen, welche jeweils in den Höckern 14.3 eingelassen/eingebettet sind. Wahlweise können die Kupplungsmittel 16 ebenfalls integral-einstückig implementiert sein, z.B. als Gewindebohrungen in den jeweiligen Höckern. Radial innen von den Höckern 14.3 kann eine vorteilhaft nur umfangssegmentweise Zentrierkante bzw. ein Zentrierabsatz 17 (Zentriermittel, Zentrierung) vorgesehen sein (z.B. einzelne Zentriernocken jeweils an den Höckern), insbesondere konstruktiv integral im Vollmaterial, bevorzugt nicht umlaufend sondern lediglich in einzelne Umfangssegmenten (in wenigstens drei Umfangssegmenten). Die Zentrierfunktion ist insbesondere im Kontext einer Anwendung im Hochdrehzahlbereich von großem praktischem Nutzen, insbesondere um Unwuchten auf einfache Weise möglichst komplett vermeiden zu können. Das vorliegende konstruktive Konzept ermöglicht auf vorteilhafte Weise, Zentrierkanten(segmente) auch integral-einstückig zu implementieren, sei es direkt durch additive Fertigung, sei es wahlweise durch Nachbearbeitung (z.B. spanende Nachbearbeitung), insbesondere zwecks Maximierung der Genauigkeit. Wahlweise sind die Zentriermittel leicht konisch ausgestaltet, insbesondere zwecks noch einfacherer und exakterer Montage. Alternativ könnten auch Zentrierstifte oder dergleichen eher herkömmliche Zentrierhilfsmittel vorgesehen sein.

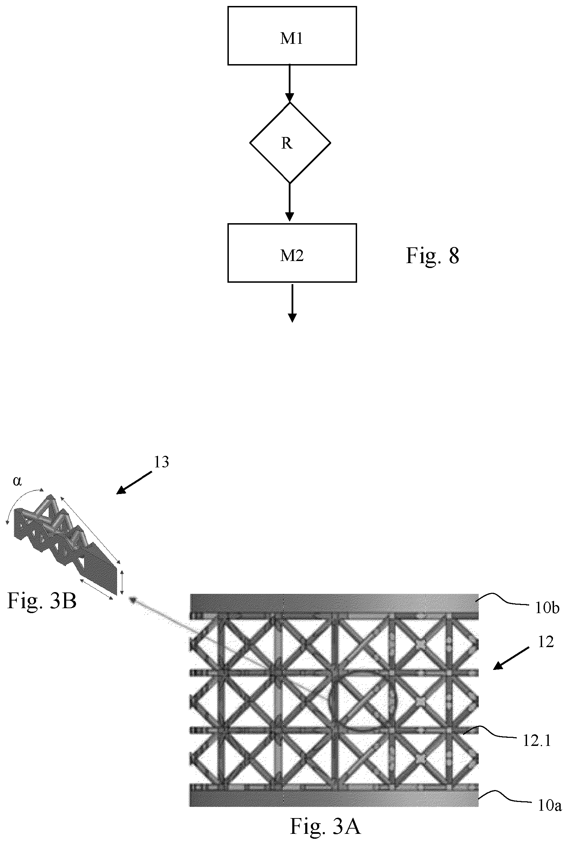

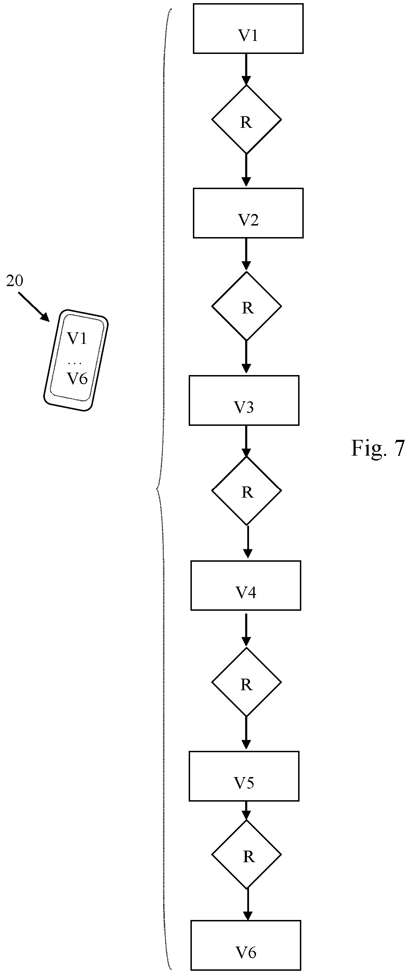

In den Figuren 7, 8 werden erste, zweite, dritte, vierte, fünfte, sechste Herstellungsverfahrensschritte V1, V2, V3, V4, V5, V6 und erste, zweite Montageverfahrensschritte M1, M2 veranschaulicht, wobei zwischen einzelnen Schritten wahlweise ein (optionaler) prozessualer Anpassungs-/Regelungsschritt R implementiert bzw. vorgesehen sein kann.

Es ist zu verstehen, dass die hier beschriebenen Schritte eines Herstellungsverfahrens mittels eines Computerprogrammprodukts gesteuert/geregelt werden können, welches über eine Benutzerschnittstelle genutzt werden kann, wobei die Benutzerschnittstelle vorteilhaft eingerichtet ist zum Vorgeben wenigstens einer Raumzelle zum kraft-/größenskalierbaren Erstellen einer/der integral-einstückigen materialelastischen Gitterstruktur aus einer Vielzahl von Raumzellen zum Bilden des zwischen zwei Abschnitt eines/des entsprechenden Triebstrangs kuppelbaren elastischen Kupplungsabschnitts der elastischen Kupplungseinrichtung. Die anwendungsspezifische Implementierung kann demnach vorteilhaft über eine/die Benutzerschnittstelle 20 erleichtert werden, welche z.B. über einen Computer oder Server oder eine Internetseite (webbasiert) oder über eine Applikation auf einem Smartphone drahtlos angebunden an einen Designprozess bzw. an eine additive Fertigungsmaschine durch einen Nutzer zur Vorgabe insbesondere der Eigenschaften der Gitterstruktur bei der Implementierung der elastischen Kupplungseinrichtung bedient werden kann, wobei der mehrstufige Prozess vorteilhaft in der Art eines digitalen Zwillings mittels der Benutzerschnittstelle gespiegelt wird, insbesondere indem der Nutzer zu jedem der Schritte V1 bis V6 Vorgaben machen kann oder anderweitig in den Prozess eingreifen kann.

Im Folgenden werden Besonderheiten der Erfindung unter Bezugnahmen auf einzelne Figuren bzw. Ausführungsbeispiele erläutert.

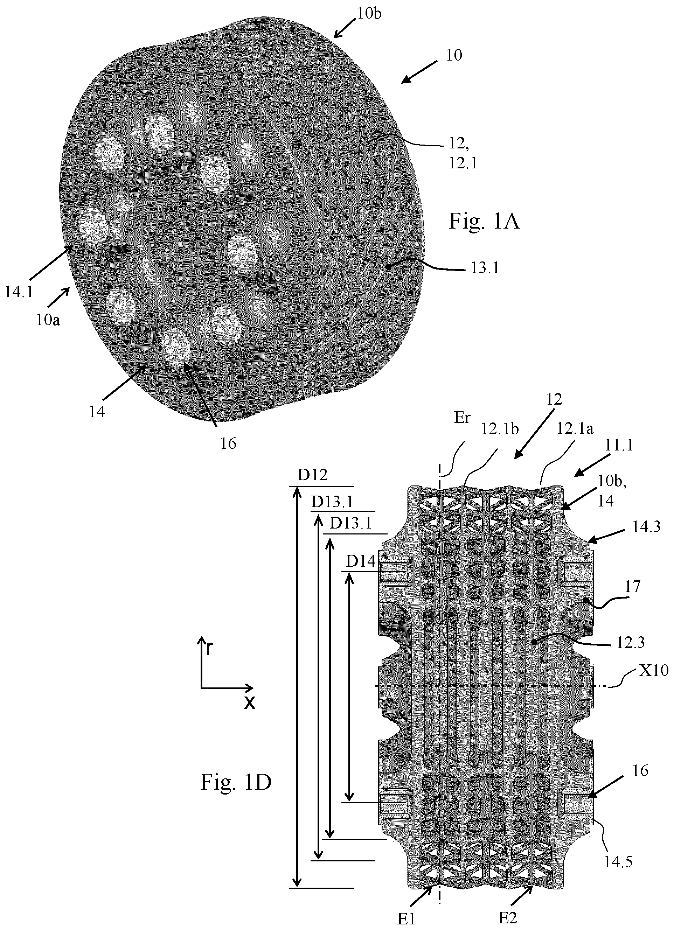

In **Fig. 1A** ist eine elastische Kupplungseinrichtung mit Gitterstruktur aus mehreren radialen Ebenen von Raumzellen dargestellt, bei welcher die erste und zweite Kupplungsseite zumindest annähernd symmetrisch aufgebaut sind, einerseits jeweils rotationssymmetrisch, andererseits auch spiegelsymmetrisch. Es sind je Scheibe 14 acht Höcker 14.1 und auch acht Kupplungsmittel 16 implementiert, welche jeweils einen Schraubverbindungspunkt 14.1 definieren.

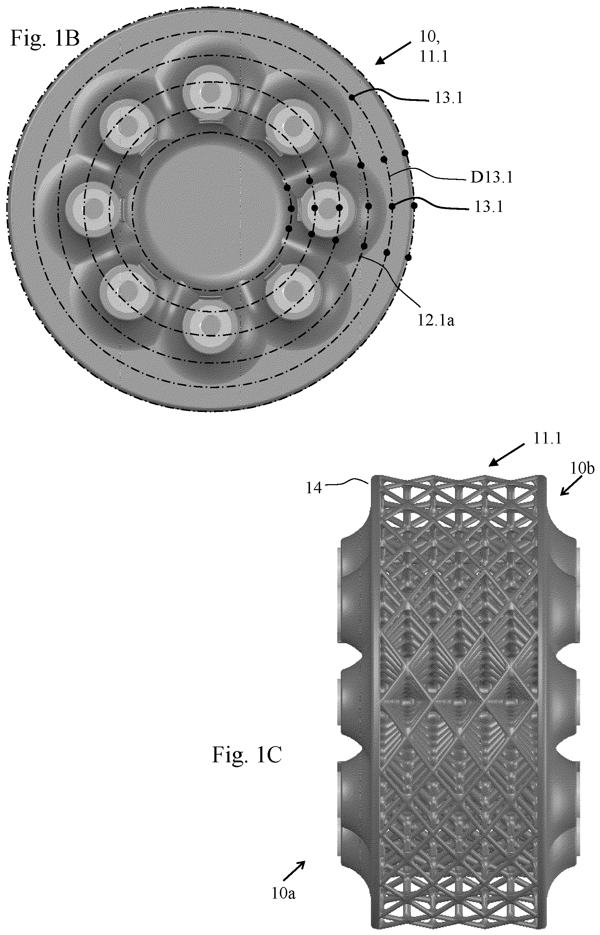

In **Fig. 1B** ist erkennbar, dass die offenzellige dreidimensionale Gitterstruktur durch eine Vielzahl von Knotenpunkten 13.1 gebildet ist, an welchen die Gitterstrukturelemente bzw. Gitterstäbe miteinander verknüpft sind, wobei die Knotenpunkte 13.1 auf mehreren Teilkreis-Durchmessern D13.1 und auch in unterschiedlichen Radialebenen (vergleiche Fig. 1D) angeordnet sind, vorteilhaft zumindest annähernd konzentrisch um die Rotationsachse.

In **Fig. 1C** ist der auf skalierbaren Raumzellen basierende Aufbau der Gitterstruktur in radialer Ansicht gezeigt. Die offenzellige Struktur wird in Fig. 1C insbesondere in den radial außenliegenden Abschnitten der Kupplungseinrichtung sichtbar; erzwungene (Luft-)Konvektion bei Rotation der Kupplungseinrichtung führt zu vergleichsweise effektiver Wärmeabgabe von den Gitterstrukturelementen bzw. Gitterstäben der Gitterstruktur an die Umgebung, insbesondere mit erzwungener Konvektion zumindest in tangentialer Richtung bzw. in Umfangsrichtung, wahlweise auch von erzwungener Konvektion auch in radialer Richtung. Hierdurch kann eine thermische Beanspruchung minimiert werden, bei maximierter Lebensdauer. Zur jeweiligen Kupplungsseite 10a, 10b hin, also stirnseitig, gehen die Gitterstruktur-Knotenpunkte integral-einstückig in die entsprechende zum Kuppeln von Triebstrangkomponenten vorgesehene Scheibe 14 über.

In **Fig. 1D** ist eine/die Gitterstruktur mit einem Aufbau in drei Ebenen zwischen den Anschlussseiten erkennbar, wobei die einzelnen Strukturelemente/Stäbe der Gitterstruktur mehrere Raumzellenradialebenen Er bilden, die sich zumindest annähernd parallel zwischen den Anschlussseiten bzw. Scheiben 14 erstrecken. Die Kupplungsmittel 16 sind als separate Maschinenelemente in die Höcker 14.3 eingebettet. Hierdurch kann auch eine besonders robuste Anschlussfläche bzw. Anschlussebene 14.5 bereitgestellt werden, nämlich durch die Stirnseiten der Kupplungsmittel 16. Abgesehen davon ist die elastische Kupplungseinrichtung integral-einstückig ausgeführt, bei besonders hohen Anforderungen an ein geringes Eigengewicht und/oder an geringe Materialkosten und/oder an besonders leichte Verfügbarkeit vorteilhaft aus Kunststoff. Aus Fig. 1D geht zudem hervor, dass die Stärke der Gitterstrukturelemente/Gitterstäbe mit zunehmendem Radius, also nach außen hin abnimmt. Wahlweise ist das je Raumzelle eingesetzte Material (Menge, Aufkommen) zumindest annähernd konstant, also weitgehend unabhängig von der Radialposition der Raumzelle. Anders ausgedrückt: In dem Maße, in welchem die Raumzellen nach radial außen hin größer werden, kann auch die Materialstärke abnehmen. In Fig. 1D sind zudem auf einer/derselben Mantelhüllfläche (bzw. auf demselben Radius bzw. Durchmesser) angeordnete Gitterstrukturelemente/Gitterstäbe 12.1a und in zumindest annähernd radialer Ausrichtung angeordnete Gitterstrukturelemente/Gitterstäbe 12.1b individuell bezeichnet.

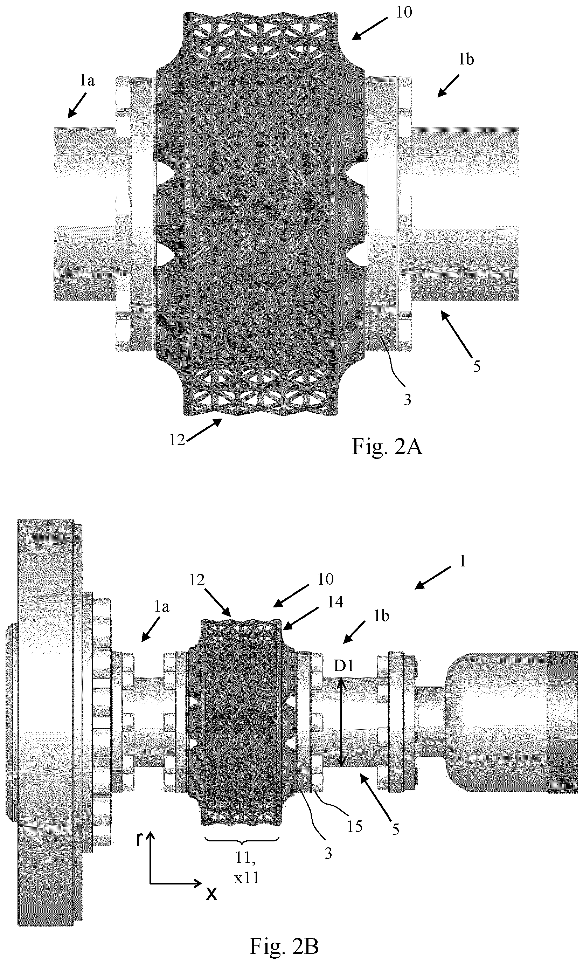

In den **Fig. 2A, 2B** ist ein Ausführungsbeispiel für eine Einbindung der Kupplungseinrichtung 10 in einen Triebstrang 1 gezeigt. Die Kupplungseinrichtung 10 ist integral-einstückig ausgestaltet, mit der Gitterstruktur in integral-einstückiger Ausgestaltung in integraler Verbindung mit den stirnseitigen Scheiben 14, und mit deren Scheiben 14 an starre Flanschteile 3 des Triebstrangs 1 gekuppelt, z.B. mittels Schraubverbindungen. Der erste und zweite Abschnitt 1a, 1b des Triebstrangs gehen seitens der Kupplungseinrichtung 10 jeweils in das entsprechende Flanschteil 3 über und können auch in der jeweils entgegengesetzten axialen Richtung (von der Kupplungseinrichtung 10 abgewandt) als zumindest im Wesentlichen starre Fortsetzung 5 des Triebstrangs 1 erachtet werden.

Aus den Fig. 1D und Fig. 2B gehen beispielhafte Durchmesserverhältnisse hervor: Der Außendurchmesser D1 des jeweils angrenzenden Triebstrangabschnitts ist kleiner als der Kupplungs-/Verbindungs-Durchmesser D14, welcher wiederum vom Außendurchmesser D12 der Gitterstruktur 12 überragt wird. Knotenpunkte 13.1 der Gitterstruktur sind auf unterschiedlichen Teilkreisen bzw. Durchmessern D13.1 angeordnet. In Fig. 1D ist zudem die Rotationsachse X10 angedeutet.

In Fig. 2B ist erkennbar, dass die Gitterstruktur 12 den elastischen Kupplungsabschnitt 11 der gesamten Kupplungseinrichtung 10 festlegt bzw. axial begrenzt, so dass der elastische Axialabschnitt x11 der Kupplungseinrichtung 10 im Wesentlichen oder sogar ausschließlich durch die Gitterstruktur 12 definiert ist. Anders ausgedrückt: Die Elastizität (bzw. Steifigkeit) der Kupplungseinrichtung 10 und hier auch des gesamten Triebstrangs wird durch die Gitterstruktur 12 vorgegeben, und unter Vernachlässigung der Axialerstreckung der Scheiben 14 über die gesamte Axialerstreckung der elastischen Kupplungseinrichtung 10. Dies gilt für das hier gezeigte Ausführungsbeispiel sowohl in axialer Erstreckungsrichtung (x) des Triebstrangs als auch in radialer Erstreckungsrichtung (r). Mit anderen Worten kann die Elastizität mittels der hier beschriebenen Kupplungseinrichtung 10 im Wesentlichen über den bzw. im Bereich des gesamten von der Kupplungseinrichtung 10 eingenommenen Bauraum(s) generiert werden; hierdurch kann auch die Implementierung einer dreidimensionalen Elastizität (in mehreren Raumrichtungen und/oder um mehrere Raumachsen) auf besonders vorteilhafte bzw. auf besonders variable Weise realisiert werden.

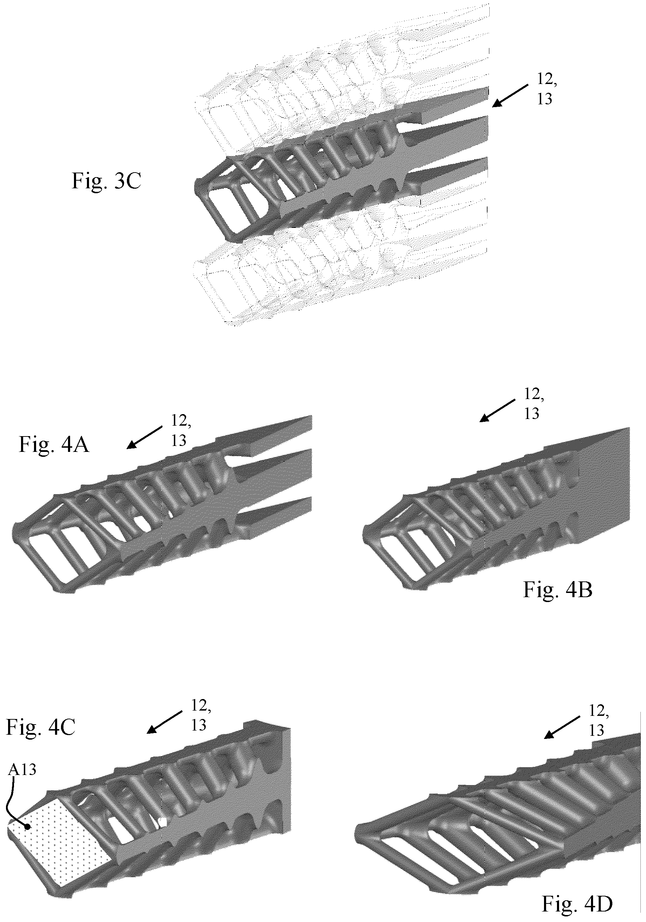

Die **Fig. 3** illustrieren jeweils geometrische Details von einer oder mehreren Raumzelle der Gitterstruktur, basierend auf welchen die Gitterstruktur größentechnisch bzw. hinsichtlich Kraft-/Drehmomentübertragbarkeit bzw. hinsichtlich Elastizitätseigenschaften (bzw. Steifigkeit) vordefiniert und auch skaliert werden kann.

**Fig. 3A** veranschaulicht eine weitere geometrische Struktur als Beispiel für die Gitterstruktur. Es ist zu verstehen, dass die in Fig. 3A gezeigte Struktur der Gitterstruktur, also die spezifische Ausrichtung der einzelnen Gitterstrukturelemente/Gitterstäbe, nur einer von unterschiedlichen möglichen Varianten entspricht.

**Fig. 3B** veranschaulicht beispielhaft in einer Detailansicht den Aufbau eines Raumzellen-Zylindersegments, zur Verdeutlichung des konstruktiven Konzeptes, auf welchem die vorliegende Erfindung basiert. Vorteilhaft finden sich in wenigstens einer Raumrichtung oder -Ebene wiederkehrende regelmäßige Strukturen wieder. Bei einer Implementierung basierend auf Zylindersegmenten ist der Umfangswinkel α einer der Auslegungsparameter.

**Fig. 3C** veranschaulicht das räumliche Skalierungskonzept, welches mittels der hier beschriebenen Gitterstruktur realisierbar ist, anhand einer grafisch hervorgehobenen Aneinanderreihung radial aneinandergrenzender Raumzellen. Die jeweilige Raumzelle wird von radial innen nach radial außen kontinuierlich größer, so dass sich die gebildeten (Hohl-)Zylindersegmente sternförmig von innen nach außen erstrecken. Radial innen münden die hier beschriebenen Raumzellen jeweils in scheibenartigen Abschnitten bzw. Stegen, die bei Rotationssymmetrie Scheiben aus Vollmaterial bilden. Zudem sind diese Raumzellen in beiden axialen Richtungen Teil der Gitterstruktur.

In den **Fig. 4A, 4B, 4C, 4D** werden beispielhaft unterschiedliche Konfigurationen von radial aneinandergrenzenden Raumzellen veranschaulicht, die jeweils ein (Hohl-)Zylindersegment bilden können. **Fig. 4A** zeigt radial aneinandergrenzende Raumzellen, die nach radial innen in scheibenartige Abschnitte münden. **Fig. 4B** zeigt radial aneinandergrenzende Raumzellen, die nach radial innen in massives Vollmaterial münden. **Fig. 4C** zeigt radial aneinandergrenzende Raumzellen, die sich nach radial innen nur bis auf einen bestimmten Durchmesser erstrecken, also einen radial innenliegenden Hohlraum belassen, so dass bei räumlicher Skalierung dieser Architektur Hohlzylindersegmente gebildet werden. **Fig. 4D** zeigt ein weiteres Ausführungsbeispiel mit stärker abgeflachter parallelogrammartiger bzw. rautenförmiger Raumzellengeometrie.

In Fig. 4C ist zudem eine Raumzellen-Grundfläche A13 angedeutet (perspektivisch leicht verzerrt), hier in Parallelogramm-Form. Es ist zu verstehen, dass als Auslegungsparameter auch eine davon abweichende, geometrisch andersartig ausgestaltete Raumzellen-Grundfläche A13 herangezogen werden kann, z.B. eine dreiecksförmige oder fünf- oder sechseckförmige Raumzellen-Grundfläche. Insoweit kann der Fachmann ausgehend von der vorliegenden Offenbarung eigene (geometrische) Optimierungsmaßnahmen anstrengen, um eine für den jeweiligen Anwendungsfall besonders vorteilhafte Gitterstruktur-Architektur erzielen zu können. Die Auswahl einer besonders vorteilhaften Raumzellen-Grundfläche oder Raumzellen-Gesamtgeometrie kann dabei auch computerimplementiert unterstützt werden, z.B. in Abhängigkeit von vorab anwendungsspezifisch eingepflegten (Auslegungs-)Parametern.

Zu den hier vornehmlich beschriebenen Varianten rautenförmiger Raumzellen-Grundflächen sei lediglich angemerkt, dass sich diese als guter Kompromiss aus geometrischer Komplexität, Robustheit, Offenzelligkeit (und damit Durchlüftung), Kraft-/Drehmomentübertragbarkeit, Steifigkeit bzw. Elastizität erwiesen haben, insbesondere im Kontext mit Kunststoff-Materialien, und insbesondere auch in Hinblick auf eine hinsichtlich Abschluss der Architektur auf der zylindrischen Außenmantelhülle vorteilhafte Konfiguration.

In den **Fig. 5A, 5B, 5C, 5D** wird das geometrische Konzept bzw. die Architektur der Gitterstruktur gemäß einem Ausführungsbeispiel auf schematische Weise veranschaulicht. **Fig. 5A** zeigt ein zylindrisches Raumvolumen, welches von der Gitterstruktur eingenommen bzw. umgrenzt wird. **Fig. 5B** zeigt eine einzelne Radialebene bzw. radiale Knotenpunktebene dieser Gitterstruktur, bei zylindrischer Ausgestaltung. **Fig. 5C** zeigt ein sich über mehrere radiale Knotenpunktebenen erstreckendes Zylindersegment der Gitterstruktur. **Fig. 5D** zeigt ein sich in einer einzigen radialen Gitterstrukturebene (z.B. umfassend zwei radiale Knotenpunktebenen) erstreckendes Zylindersegment der Gitterstruktur.

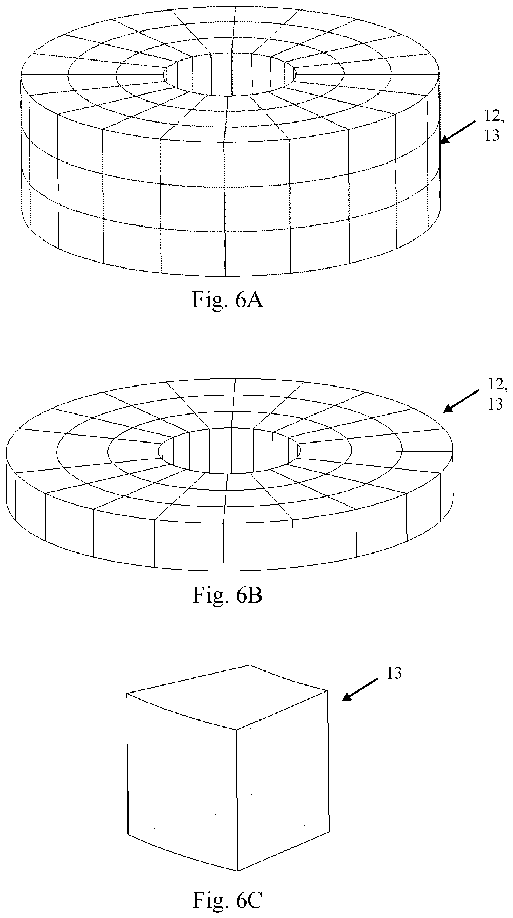

In den **Fig. 6A, 6B, 6C** wird das geometrische Konzept bzw. die Architektur der Gitterstruktur gemäß einem weiteren Ausführungsbeispiel auf schematische Weise veranschaulicht. **Fig. 6A** zeigt ein hohlzylindrisches Raumvolumen, welches von der Gitterstruktur eingenommen bzw. umgrenzt wird. **Fig. 6B** zeigt eine einzelne Radialebene bzw. radiale Ebene dieser Gitterstruktur (z.B. umfassend zwei radiale Knotenpunktebenen), bei freibleibendem Innenvolumen, also bei hohlzylindrischer Ausgestaltung. **Fig. 6C** zeigt eine hohlzylindrische Skalierungseinheit 13.

Aufgrund der schematischen Darstellung gemäß den Figuren 5 und 6 wird in diesem Zusammenhang auch von Skalierungseinheit anstelle von Raumzelle gesprochen. Es ist zu verstehen, dass der in den Figuren 5 und 6 angedeutete Umfangswinkel eines jeweiligen Zylindersegments eine beispielhafte Angabe bleibt; bei z.B. zwanzigfach vorgegebener Teilung der Umfangsgeometrie (Rotationssymmetrie) ergibt sich der entsprechende Winkel des Umfangssegments. Die Rotationssymmetrie kann dank der hier beschriebenen Gitterstruktur-Architektur auch basierend auf einem davon abweichenden Umfangswinkel sichergestellt werden.

**Fig. 7** veranschaulicht Schritte eines Herstellungsverfahrens zum Herstellen einer elastischen Kupplungseinrichtung gemäß der vorliegenden Offenbarung, insbesondere mit den folgenden Schritten oder zumindest teilweise umfassend die folgenden Schritte:
Schritt **V1** Definieren wenigstens einer/der Raumzelle der Gitterstruktur, insbesondere basierend auf wenigstens einem der folgenden Parameter: zu übertragendes Drehmoment, wenigstens eine Zielsteifigkeit (insbesondere in Torsionsrichtung), Grundfestigkeit des Werkstoffs, Gewicht/Masse, Anzahl Raumzellen in radialer und/oder axialer Richtung und/oder in Umfangsrichtung;
Schritt **V2** Definieren der geometrischen Eigenschaften eines jeweiligen Gitterstrukturelements, insbesondere Stabs, einer/der Raumzelle;
Schritt **V3** Definieren der Ausgestaltung der ersten und/oder zweiten Kupplungsseite (z.B. Scheibe mit Ausnehmungen für Gewindehülsen);
Schritt **V4** Skalieren (konstruktiv oder fertigungstechnisch additiv) der Gitterstruktur ausgehend von einer Raumzelle, insbesondere in mehreren radialen Ebenen;
Schritt V5 Ausbilden eines elastischen Kupplungsabschnitts (zwischen der ersten und zweiten Kupplungsseite), indem eine sich zumindest auch in radialer Richtung erstreckende Gitterstruktur additiv erzeugt wird;
Schritt V6 integral-einstückiges Einbinden der elastischen Gitterstruktur zwischen der ersten und zweiten Kupplungsseite, bzw. Anbinden der ersten Kupplungsseite an einem entsprechenden stirnseitigen Anschluss der Gitterstruktur und Anbinden der zweiten Kupplungsseite an einem entsprechenden gegenüberliegenden stirnseitigen Anschluss der Gitterstruktur;

In **Fig. 8** sind zwei Montageschritte M1, M2 veranschaulicht, nämlich ein erster Montageschritt M1 betreffend ein Kuppeln/Verbinden der ersten Kupplungsseite mit einem/dem entsprechenden Axialabschnitt des Triebstrangs, und ein zweiter Montageschritt M2 betreffend ein Kuppeln/Verbinden der zweiten Kupplungsseite mit einem/dem entsprechenden Axialabschnitt des Triebstrangs. Durch die Montageschritte M1, M2 kann der Triebstrang komplettiert werden.

Die in Fig. 7 und Fig. 8 angedeuteten rautenförmigen Felder zwischen den einzelnen Schritten veranschaulichen optionale prozessuale Anpassungs-/Regelungsschritt R für den Fachmann, beispielsweise eine geometrische Anpassung der einzelnen Gitterstrukturelemente bzw. Stäbe der Gitterstruktur zwischen den Schritten V1 und V2 und V3, z.B. in Abhängigkeit von einer anwendungsspezifischen Größenskalierung. Die Schritte V1 bis V3 können dabei auch eine Materialauswahl bzw. -vorgabe implizieren, sei es eine grundsätzliche Auswahl unter Kunststoff- oder Metallmaterialien, sei es eine sehr anwendungsspezifische Optimierungsauswahl z.B. eines ganz bestimmten Kunststoffs (z.B. in Abhängigkeit von Umgebungs-/Umweltparametern betreffend die tatsächlichen Betriebsbedingungen für die jeweilige Kupplungseinrichtung).

### Bezugszeichenliste

- 1: Triebstrang
- 1a: erster Abschnitt
- 1b: zweiter Abschnitt
- 3: Flanschteil (erster oder zweiter Abschnitt)
- 5: im Wesentlichen starre Fortsetzung des Triebstrangs
- 10: elastische Kupplungseinrichtung
- 10a: erste Kupplungsseite
- 10b: zweite Kupplungsseite
- 11: elastischer Kupplungsabschnitt
- 11.1: integral-einstückige elastische Kupplungskomponente
- 12: Gitterstruktur
- 12.1: Gitterstrukturelement, insbesondere Gitterstab
- 12.1a: in einer Mantelhüllfläche angeordnete Gitterstrukturelemente/Gitterstäbe
- 12.1b: in zumindest annähernd radialer Ausrichtung angeordnete Gitterstrukturelemente/Gitterstäbe
- 12.3: scheibenartiger Steg, insbesondere in zumindest annähernd radialer Erstreckung
- 13: dreidimensionale Raumzelle
- 13.1: Knotenpunkt
- 14: Scheibe oder dergleichen stirnseitiger oder radial abstehender Flanschabschnitt
- 14.1: Verbindungspunkte
- 14.3: Höcker oder Erhebung oder Verdickung in axialer Richtung (Aufnahme für Verbindungs-/Kupplungsmittel)
- 14.5: stirnseitige Anlage-/Anschlagfläche
- 15: Verbindungsmittel, insbesondere Schraubverbindungsmittel
- 16: Kupplungsmittel, z.B. Gewindehülse
- 17: Zentriermittel, insbesondere Zentrierkante, Zentrierabsatz (integral)
- 20: Benutzerschnittstelle
- A13: Raumzellen-Grundfläche
- D1: Außendurchmesser Triebstrangabschnitt
- D12: Außendurchmesser der Gitterstruktur
- D13.1: (jeweiliger) Teilkreis bzw. Durchmesser von Knotenpunkten
- D14: Kupplungs-/Verbindungs-Durchmesser
- Er: Knotenpunktebene (radial)
- E1, E2: erste, zweite Knotenpunktebene
- M1, M2: erster, zweiter Montageverfahrensschritt
- V1, V2, V3, V4, V5, V6: erster, zweiter, dritter, vierter, fünfter, sechster Herstellungsverfahrensschritt
- R: optionaler prozessualer Anpassungs-/Regelungsschritt
- X10: Rotationsachse
- x11: elastischer Axialabschnitt
- x: axiale Erstreckungsrichtung (des Triebstrangs)
- r: radiale Erstreckungsrichtung
- α: Umfangswinkel eines (Hohl-)Zylindersegments bzw. einer Raumzelle

## Patentansprüche

1. Elastische Kupplungseinrichtung (10) für Triebstränge (1), aufweisend eine mit einem ersten Abschnitt (1a) eines/des entsprechenden Triebstrangs kuppelbare erste Kupplungsseite (10a) und eine mit einem zweiten Abschnitt (1b) des Triebstrangs kuppelbare zweite Kupplungsseite (10b), wobei zwischen der ersten und zweiten Kupplungsseite ein elastischer Kupplungsabschnitt (11) ausgebildet ist;
**dadurch gekennzeichnet, dass** der elastische Kupplungsabschnitt (11) durch eine sich zumindest auch in radialer Richtung erstreckende Gitterstruktur (12) aus dreidimensionalen Raumzellen (13) gebildet ist, welche zumindest einen Axialabschnitt der elastischen Kupplungseinrichtung (10) drehmomentübertragend überbrückt.

2. Elastische Kupplungseinrichtung (10) nach Anspruch 1, wobei eine jeweilige dreidimensionale Raumzelle die geometrische Form eines Zylindersegments oder Hohlzylindersegments einnimmt oder zusammen mit in radialer Richtung benachbarten weiteren Raumzellen das (Hohl-)Zylindersegment bildet.

3. Elastische Kupplungseinrichtung (10) nach einem der vorhergehenden Ansprüche, wobei die Gitterstruktur eine Vielzahl von Knotenpunkten auf einer Mehrzahl von Teilkreisen umfasst; und/oder wobei die Gitterstruktur eine Vielzahl von Knotenpunkten in einer Mehrzahl von radial ausgerichteten Ebenen umfasst, wobei die Knotenpunkte einer jeweiligen radialen Ebene zur Rotationsachse hin zu massiven scheibenartigen Stegen zusammenlaufen.

4. Elastische Kupplungseinrichtung (10) nach einem der vorhergehenden Ansprüche, wobei die dreidimensionalen Raumzellen in radialer Richtung aufeinanderfolgend größer skaliert sind, insbesondere bei zumindest annähernd demselben Materialaufkommen zum Bilden der jeweiligen Raumzelle.

5. Elastische Kupplungseinrichtung (10) nach einem der vorhergehenden Ansprüche, wobei die Gitterstruktur (12) basierend auf einer Vielzahl von Raumzellen (13) jeweils aus Gitterstrukturelementen, insbesondere Gitterstäben (12.1) mit wahlweise als Funktion der Radialposition vordefinierbarem Durchmesser und/oder Querschnittsprofil aufgebaut ist.

6. Elastische Kupplungseinrichtung (10) nach einem der vorhergehenden Ansprüche, wobei die Gitterstruktur (12) eine erste Knotenpunktebene (E1) aufweist, welche eine integral-einstückige Anbindung zur ersten Kupplungsseite (10a) sicherstellt, und/oder wobei die elastische Gitterstruktur eine zweite Knotenpunktebene (E2) aufweist, welche eine integral-einstückige Anbindung zur zweiten Kupplungsseite (10b) sicherstellt; und/oder wobei die Gitterstruktur (12) eine integral-einstückige Anbindung zu wenigstens einer der ersten und zweiten Kupplungsseiten (10a, 10b) bereitstellt, insbesondere zu beiden Kupplungsseiten.

7. Elastische Kupplungseinrichtung (10) nach einem der vorhergehenden Ansprüche, wobei die elastische Kupplungseinrichtung als elastisches Kupplungselement ausgestaltet ist, welches aus den folgenden integral-einstückig miteinander verbundenen Bestandteilen aufgebaut ist: erste Kupplungsseite (10a) mit einer ersten flansch-/kuppelbaren Scheibe (14), Gitterstruktur (12), zweite Kupplungsseite (10b) mit einer zweiten flansch-/kuppelbaren Scheibe (14);
und/oder wobei die elastische Kupplungseinrichtung durch einen einzigen integral-einstückigen elastischen Kupplungsabschnitt (11) gebildet ist, dessen Elastizität durch die Gitterstruktur definiert ist, und welcher beidseitig in den Triebstrang kuppelbar ist, insbesondere stirnseitig verschraubbar ist.

8. Elastische Kupplungseinrichtung (10) nach einem der vorhergehenden Ansprüche, wobei die Elastizität der elastischen Kupplungseinrichtung ausschließlich mittels der Gitterstruktur (12) sichergestellt ist, insbesondere sowohl in axialer und/oder radialer Raumrichtung als auch um wenigstens eine Raumachse; und/oder wobei die Gitterstruktur (12) eine zumindest hinsichtlich der Grundform der dreidimensionalen Raumzellen regelmäßige Struktur aufweist.

9. Triebstrang (1), insbesondere Antriebsstrang oder Prüfstands-Triebstrang, aufweisend wenigstens eine zwischen einen ersten und zweiten Abschnitt (1a, 1b) des Triebstrangs gekuppelte oder anderweitig verbaute elastische Kupplungseinrichtung (10) nach einem der vorhergehenden Ansprüche.

10. Verfahren zum Herstellen einer elastischen Kupplungseinrichtung (10) für Triebstränge (1), aufweisend eine mit einem ersten Abschnitt (1a) eines/des entsprechenden Triebstrangs (1) kuppelbare erste Kupplungsseite (10a) und eine mit einem zweiten Abschnitt (1b) des Triebstrangs (1) kuppelbare zweite Kupplungsseite (10b), wobei zwischen der ersten und zweiten Kupplungsseite (10a, 10b) ein elastischer Kupplungsabschnitt (11) ausgebildet wird, welcher durch eine sich zumindest auch in radialer Richtung (r) erstreckende Gitterstruktur (12) aus dreidimensionalen Raumzellen gebildet wird, welche additiv erstellt ist/wird und sich integral-einstückig zwischen der ersten und zweiten Kupplungsseite (10a, 10b) erstreckt und bei bestimmungsgemäßer Anordnung im Triebstrang den entsprechenden räumlichen Axialabschnitt (x11) ohne zusätzliche Komponenten mittels der Gitterstruktur überbrückt.

11. Herstellungsverfahren nach dem vorhergehenden Verfahrensanspruch, wobei die Gitterstruktur (12) in einstückig-integraler Ausgestaltung mit zumindest einer der kuppelbaren Kupplungsseiten (10a, 10b) der elastischen Kupplungseinrichtung (10) additiv hergestellt wird, bevorzugt in einstückig-integraler Verbindung mit beiden kuppelbaren Kupplungsseiten der elastischen Kupplungseinrichtung, insbesondere indem die Gitterstruktur (12) ausgehend von einer dreidimensionalen Raumzelle (13) größenskaliert wird, insbesondere in mehreren radialen Ebenen (Er) jeweils umfassend eine Vielzahl von integral-einstückig ineinander übergehenden Raumzellen (13).

12. Elastische Kupplungseinrichtung (10) für Triebstränge (1), mit einer ersten Kupplungsseite (10a) und einer zweiten Kupplungsseite (10b), zwischen welchen ein elastischer Kupplungsabschnitt (11) ausgebildet ist, welcher durch eine sich zumindest auch in radialer Richtung erstreckende materialelastische Gitterstruktur (12) gebildet ist, insbesondere elastische Kupplungseinrichtung nach einem der Ansprüche 1 bis 8,
hergestellt durch ein Herstellungsverfahren nach einem der vorhergehenden Verfahrensansprüche.

13. Computerprogrammprodukt umfassend Befehle, die bei Ausführung des Computerprogrammproduktes auf einem Computer diesen dazu veranlassen, Schritte zum Steuern/Regeln eines Herstellungsverfahrens nach einem der Verfahrensansprüche 10 bis 11 auf dem Computer auszuführen, insbesondere Computerprogrammprodukt eingerichtet zum Vorgeben einer Raumzelle (13) zum kraft-/größenskalierbaren Erstellen einer/der integral-einstückigen materialelastischen Gitterstruktur (12) aus einer Vielzahl der Raumzellen zum Bilden des zwischen zwei Abschnitten (1a, 1b) eines/des entsprechenden Triebstrangs (1) kuppelbaren elastischen Kupplungsabschnitts (11) der elastischen Kupplungseinrichtung (10).

14. Verwendung einer elastische Kupplungseinrichtung (10) nach einem der Ansprüche 1 bis 8 oder 12 in einem Triebstrang (1) aus der folgenden Gruppe: Antriebstrang insbesondere für industrielle Anwendungen, Prüfstands-Triebstrang insbesondere zur Erprobung schnelllaufender Antriebe für die Elektromobilität, Triebstrang für den Hochdrehzahlbereich, Triebstrang insbesondere für Baumaschinen, Fahrzeuge, mobile Vorrichtungen für Logistik und Mobilität.

15. Verwendung einer integral-einstückigen materialelastischen Gitterstruktur (12) aus sich auch in radialer Richtung erstreckenden dreidimensionalen Raumzellen zum Bereitstellen eines/des elastischen Kupplungsabschnitts (11) einer elastischen Kupplungseinrichtung (10) zwischen einem ersten und zweiten Abschnitt (1a, 1b) eines Triebstrangs (1), wobei mittels des strukturellen Aufbaus der integral-einstückigen materialelastischen Gitterstruktur (12) die Elastizität der zu erstellenden Kupplung definiert wird.
